# EUROPEAN PATENT APPLICATION

(11) **EP 4 753 194 A1**
(43) Date of publication of application: **03.06.2026**
(21) Application number: 23946265.8
(22) Date of filing: 27.07.2023
(51) Int. Cl.: H04L 5/00

(54) **COMMUNICATION METHOD AND APPARATUS, AND DEVICE, STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); XIAO, Han, Dongguan, Guangdong 523860 (CN)
(74) Representative: Penza, Giancarlo
(86) International application number: PCT/CN2023/109638
(87) International publication number: WO 2025/020183

(57) **Abstract**

Provided are a communication method and apparatus, a device, a storage medium, a chip, a product, and a program. The method includes: a terminal device transmitting a first set and/or receiving a second set. Herein the first set is used to indicate at least one of the following: one or more first reference signals supported by the terminal device, or one or more first processing models supported by the terminal device; the first reference signal is non-orthogonally transmitted with a data signal; and the first processing model is used to process at least one of the following: the first reference signal and the data signal that are non-orthogonally transmitted, or the first reference signal. Herein the second set is used to indicate at least one of the following: one or more second reference signals supported by a network device, or one or more second processing models supported by the network device; the second reference signal is non-orthogonally transmitted with the data signal; and the second processing model is used to process at least one of the following: the second reference signal and the data signal that are non-orthogonally transmitted, or the second reference signal.

## Description

### TECHNICAL FIELD

Embodiments of the present disclosure relate to the technical field of communications, and in particular to a communication method and apparatus, a device, a storage medium, a chip, a product, and a program.

### BACKGROUND

In related technologies, different types of signals are orthogonally transmitted in time-domain, frequency-domain, or code-domain resources. However, when transmission resources are fixed, if the resources used for transmitting one type of signal increase, the resources used for transmitting another type of signal will decrease, resulting in low resource utilization efficiency.

### SUMMARY

Embodiments of the present disclosure provide a communication method and apparatus, a device, a storage medium, a chip, a product, and a program.

In a first aspect, a communication method is provided according to an embodiment of the present disclosure. The method includes the following operation.

A terminal device sends a first set and/or receives a second set.

Herein, the first set is used to indicate at least one of the following: one or more first reference signals supported by the terminal device; or one or more first processing models supported by the terminal device. The first reference signal is non-orthogonally transmitted with a data signal; and the first processing model is used to process at least one of the following: the first reference signal and the data signal that are non-orthogonally transmitted; or the first reference signal.

The second set is used to indicate at least one of the following: one or more second reference signals supported by a network device; or one or more second processing models supported by the network device. The second reference signal is non-orthogonally transmitted with the data signal; and the second processing model is used to process at least one of the following: the second reference signal and the data signal that are non-orthogonally transmitted, or the second reference signal.

In a second aspect, a communication method is provided according to an embodiment of the present disclosure. The method includes the following operation.

A network device receives a first set and/or sends a second set.

Herein, the first set is used to indicate at least one of the following: one or more first reference signals supported by a terminal device; or one or more first processing models supported by the terminal device. The first reference signal is non-orthogonally transmitted with a data signal; and the first processing model is used to process at least one of the following: the first reference signal and the data signal that are non-orthogonally transmitted; or the first reference signal.

The second set is used to indicate at least one of the following: one or more second reference signals supported by the network device; or one or more second processing models supported by the network device. The second reference signal is non-orthogonally transmitted with the data signal; and the second processing model is used to process at least one of the following: the second reference signal and the data signal that are non-orthogonally transmitted; or the second reference signal.

In a third aspect, a communication apparatus is provided according to an embodiment of the present disclosure. The apparatus includes a communication unit.

The communication unit is configured to send a first set and/or receive a second set.

Herein, the first set is used to indicate at least one of the following: one or more first reference signals supported by the communication apparatus; or one or more first processing models supported by the communication apparatus. The first reference signal is non-orthogonally transmitted with a data signal; and the first processing model is used to process at least one of the following: the first reference signal and the data signal that are non-orthogonally transmitted; or the first reference signal.

The second set is used to indicate at least one of the following: one or more second reference signals supported by a network device; or one or more second processing models supported by the network device. The second reference signal is non-orthogonally transmitted with the data signal; and the second processing model is used to process at least one of the following: the second reference signal and the data signal that are non-orthogonally transmitted; or the second reference signal.

In a fourth aspect, a communication apparatus is provided according to an embodiment of the present disclosure. The apparatus includes a communication unit.

The communication unit is configured to receive a first set and/or send a second set.

Herein, the first set is used to indicate at least one of the following: one or more first reference signals supported by a terminal device; or one or more first processing models supported by the terminal device. The first reference signal is non-orthogonally transmitted with a data signal; and the first processing model is used to process at least one of the following: the first reference signal and the data signal that are non-orthogonally transmitted; or the first reference signal.

The second set is used to indicate at least one of the following: one or more second reference signals supported by the communication apparatus; or one or more second processing models supported by the communication apparatus. The second reference signal is non-orthogonally transmitted with the data signal; and the second processing model is used to process at least one of the following: the second reference signal and the data signal that are non-orthogonally transmitted; or the second reference signal.

In a fifth aspect, a terminal device is provided according to an embodiment of the present disclosure. The terminal device includes a processor, a memory, and a transceiver.

The memory is configured to store a computer program.

The processor is configured to call and run the computer program stored in the memory, and cooperate with the transceiver to execute the aforementioned method in the first aspect.

In a sixth aspect, a network device is provided according to an embodiment of the present disclosure. The network device includes a processor, a memory, and a transceiver.

The memory is configured to store a computer program.

The processor is configured to call and run the computer program stored in the memory, and cooperate with the transceiver to execute the aforementioned method in the second aspect.

In a seventh aspect, a computer storage medium is provided according to an embodiment of the present disclosure. The computer storage medium has stored one or more programs executed by one or more processors, to implement the aforementioned method in the first aspect or the second aspect.

In an eighth aspect, a chip is provided according to an embodiment of the present disclosure. The chip includes a processor, and the processor is configured to call and run a computer program from a memory to implement the aforementioned method in the first aspect or the second aspect.

In a ninth aspect, a computer program product is provided according to an embodiment of the present disclosure. The computer program product includes a computer storage medium storing a computer program. The computer program includes an instruction executable by at least one processor, and the instruction, when executed by the at least one processor, enables the at least one processor to implement the aforementioned method in the first aspect or the second aspect.

In a tenth aspect, a computer program is provided according to an embodiment of the present disclosure. The computer program enables a computer to execute the aforementioned method in the first aspect or the second aspect.

In the embodiments of the present disclosure, the terminal device sends the first set and/or receives the second set. Herein, the first set is used to indicate at least one of the following: one or more first reference signals supported by the terminal device; or one or more first processing models supported by the terminal device. The first reference signal is non-orthogonally transmitted with the data signal; and the first processing model is used to process at least one of the following: the first reference signal and the data signal that are non-orthogonally transmitted; or the first reference signal. Additionally, the second set is used to indicate at least one of the following: one or more second reference signals supported by the network device; or one or more second processing models supported by the network device. The second reference signal is non-orthogonally transmitted with the data signal; and the second processing model is used to process at least one of the following: the second reference signal and the data signal that are non-orthogonally transmitted; or the second reference signal. In such way, since the data signal and the reference signal are non-orthogonally transmitted, the data signal can be transmitted with the reference signal in superimposition on fixed resources. The resources for the data signal will not change with the changes in the resources for the reference signal, thereby achieving high resource utilization efficiency. Furthermore, since the terminal device sends the first reference signal(s) and/or processing model(s) that are supported by the terminal device, and/or the terminal device receives the second reference signal(s) and/or processing model(s) that are supported by the network device, the terminal device and the network device can perform the signal transmission and/or processing based on the supported reference signal(s) and/or processing model(s), which can avoid a situation where the terminal device sends the orthogonally transmitted reference signal and data signal that cannot be received and/or processed by the network device, or a situation where the network device sends the orthogonally transmitted reference signal and data signal that cannot be received and/or processed by the terminal device. Thus, the present disclosure can improve the reliability of information transmission.

### BRIEF DESCRIPTION OF THE DRAWINGS

The accompanying drawings illustrated herein are used to provide a further understanding of the present disclosure, and constitute a part of the present disclosure. The illustrative embodiments of the present disclosure and descriptions thereof are used to explain the present disclosure, and do not constitute any undue limitation of the present disclosure. In the drawings:
FIG. 1 is a schematic diagram of an application scenario of an embodiment of the present disclosure.
FIG. 2 is a schematic diagram of a channel estimation and recovery process according to an embodiment of the present disclosure.
FIG. 3 is a schematic diagram of patterns for resource allocation of data symbols and pilot symbols according to an embodiment of the present disclosure.
FIG. 4 is a schematic diagram of channel estimation according to an embodiment of the present disclosure.
FIG. 5 is a schematic flowchart of a communication method according to an embodiment of the present disclosure.
FIG. 6 is a schematic flowchart of another communication method according to an embodiment of the present disclosure.
FIG. 7 is a schematic flowchart of yet another communication method according to an embodiment of the present disclosure.
FIG. 8 is a schematic flowchart of still yet another communication method according to an embodiment of the present disclosure.
FIG. 9 is a schematic flowchart of a communication method according to another embodiment of the present disclosure.
FIG. 10 is a schematic flowchart of a communication method according to yet another embodiment of the present disclosure.
FIG. 11 is a schematic flowchart of a communication method according to still yet another embodiment of the present disclosure.
FIG. 12 is a schematic flowchart of a communication method according to still yet another embodiment of the present disclosure.
FIG. 13 is a schematic flowchart of yet another communication method according to another embodiment of the present disclosure.
FIG. 14 is a schematic flowchart of yet another communication method according to another embodiment of the present disclosure.
FIG. 15 is a schematic diagram of a structural composition of a communication apparatus according to an embodiment of the present disclosure.
FIG. 16 is a schematic diagram of a structural composition of another communication apparatus according to an embodiment of the present disclosure.
FIG. 17 is a schematic structural diagram of a communication device according to an embodiment of the present disclosure.
FIG. 18 is a schematic structural diagram of a chip of an embodiment of the present disclosure.

### DETAILED DESCRIPTION

The technical solutions in the embodiments of the present disclosure are described in the following with reference to the accompanying drawings in the embodiments of the present disclosure. It is apparent that the described embodiments are part of the embodiments of the present disclosure, but not all of the embodiments. Based on the embodiments of the present disclosure, all other embodiments acquired by those skilled in the art without creative efforts shall fall within the scope of protection of the present disclosure.

The technical solutions described in the embodiments of the present disclosure may be used in any combination without conflict. In the description of the present disclosure, the term "multiple/plurality" means two or more, unless explicitly specified otherwise.

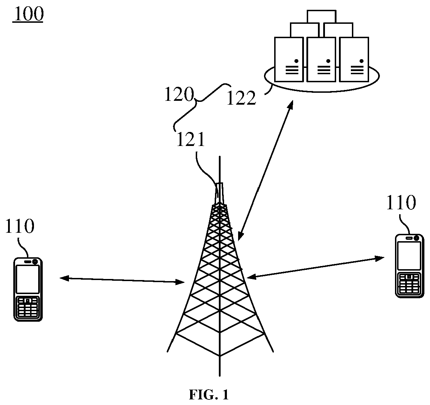

FIG. 1 is a schematic diagram of an application scenario of an embodiment of the present disclosure. As shown in FIG. 1, a communication system 100 may include terminal device(s) 110 and a network device 120. The network device 120 may communicate with the terminal device(s) 110 through an air interface. Multi-service transmission is supported between the terminal device(s) 110 and the network device 120.

It should be understood that, in the embodiments of the present disclosure, the communication system 100 is only used as an example for illustrative purpose, but the embodiments of the present disclosure are not limited thereto. That is, the technical solutions in the embodiments of the present disclosure may be applied to various communication systems, such as: a global system of mobile communication (GSM) system, a code division multiple access (CDMA) system, a wideband CDMA (WCDMA) system, a general packet radio service (GPRS), a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a universal mobile telecommunication system (UMTS), a wireless local area network (WLAN), a wireless fidelity (WiFi), an LTE time division duplex (TDD), a universal mobile telecommunication system (UMTS), an Internet of things (IoT) system, a narrow band IoT (NB-IoT) system, an enhanced machine-type communication (eMTC) system, or future communication systems (e.g., 6G and 7G communication systems), etc.

The network device 120 in the embodiments of the present disclosure may include an access network device 121 and/or a core network device 122. The access network device may provide communication coverage for a specific geographic area, and may communicate with the terminal device(s) 110 (e.g., UE(s)) located within the coverage.

The terminal device in any embodiment of the present disclosure may be a device with a wireless communication capability. The terminal device may be deployed on land, including indoors or outdoors, handheld or vehicle-mounted. The terminal device may also be deployed on water (e.g., on a ship, etc.). The terminal device may also be deployed in the air (e.g., on an airplane, a balloon, a satellite, etc.). The terminal device in any embodiment of the present disclosure may be referred to as a user equipment (UE), a mobile station (MS), a mobile terminal (MT), a user unit, a user station, a mobile site, a remote station, a remote terminal, a mobile device, a user terminal, a terminal, a device for wireless communication, a user agent, or a user apparatus. The terminal device in any embodiment of the present disclosure may include one or a combination of at least two of the following: an IoT device, a satellite terminal, a wireless local loop (WLL) station, a personal digital assistant (PDA), a handheld device with a wireless communication capability, a computing device or another processing device connected to a wireless modem, a server, a mobile phone, a pad, a computer with wireless transmission and reception capabilities, a palmtop computer, a desktop computer, a personal digital assistant, a portable media player, a smart speaker, a navigation apparatus, a smart watch, smart glasses, a smart necklace and other wearable devices, a pedometer, a digital TV, a virtual reality (VR) terminal device, an augmented reality (AR) terminal device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or a vehicle, a vehicle-mounted device, a vehicle-mounted module, a wireless modem, a handheld device, a customer premise equipment (CPE), a smart home appliance, and the like in a vehicle networking system.

Optionally, the terminal device may be any terminal device, which includes but is not limited to a terminal device connected to a network device or other terminal device(s) in a wired or wireless manner.

Optionally, the terminal device may be used for device to device (D2D) communication.

In any embodiment of the present disclosure, the access network device may include one or a combination of at least two of the following: an evolutional node B (eNB or eNodeB) in an LTE system, a next generation radio access network (NG RAN) device, a base station (gNB), a small station, a micro station in an NR system, a wireless controller in a cloud radio access network (CRAN), a wireless-fidelity (Wi-Fi) access point, a transmission reception point (TRP), a relay station, an access point, a vehicle-mounted device, a wearable device, a hub, a switch, a bridge, a router, or a network device in a future evolutional public land mobile network (PLMN), etc.

In any embodiment of the present disclosure, the core network device may be a 5th generation (5G) core (5GC) device, and may include one or a combination of at least two of the following: a sensing function (SF), an access and mobility management function (AMF), an authentication server function (AUSF), a user plane function (UPF), a session management function (SMF), a location management function (LMF), a policy control function (PCF). In other implementations, the core network device may also be an evolved packet core (EPC) device in an LTE network, such as a session management function + core packet gateway (SMF+PGW-C) device. It should be understood that the SMF+PGW-C may simultaneously implement the functions of both the SMF and the PGW-C. During the network evolution process, the aforementioned core network device may also be referred to by other names, or new network entities may be formed by dividing the functions of the core network, which are not limited in the embodiments of the present disclosure.

Various functional units in the communication system may further establish connections through next generation (NG) interface(s) for realizing communication.

For example, the terminal device may establish an air interface connection with the access network device through an NR interface for transmitting user plane data and control plane signaling. The terminal device may establish a control plane signaling connection with the AMF through an NG interface 1 (referred to as N1). The access network device, such as a next generation wireless access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). The SMF may establish a control plane signaling connection with the PCF through an NG interface 7 (referred to as N7).

One base station, one core network device and two terminal devices are exemplarily illustrated in FIG. 1. Optionally, the wireless communication system 100 may include multiple base station devices, and another number of terminal devices may be included in the coverage of each base station. No limits are made thereto in the embodiments of the present disclosure.

It should be noted that FIG. 1 is merely an illustrative example of the system in which the present disclosure is applied. Of course, the methods shown in the embodiments of the present disclosure may further be applied to other systems. In addition, the terms "system" and "network" are often used interchangeably in the present disclosure. The term "and/or" in the present disclosure only refers to an association relationship describing associated objects, and indicates that there may be three relationships. For example, A and/or B may indicate three cases: existence of A alone, existence of A and B simultaneously, and existence of B alone. Furthermore, the character "/" in the present disclosure generally indicates that the preceding and following associated objects are in an "or" relationship. It should also be understood that "indicate/indication" mentioned in the embodiments of the present disclosure may be direct indication or indirect indication, or may be indicative of an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond/correspondence" mentioned in the embodiments of the present disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that the "predefined", "protocol-agreed", "predetermined" or "predefined rule(s)" mentioned in the embodiments of the present disclosure may be implemented by pre-storing corresponding code(s), table(s), or other ways that may be used to indicate related information in devices (e.g., including the terminal device and the network device), and the specific implementation(s) are not limited in the present disclosure. For example, the "predefined" may refer to those defined in a protocol. It should also be understood that, in the embodiments of the present disclosure, the term "protocol" may refer to a standard protocol in the field of communications, such as an LTE protocol, an NR protocol, and a related protocol applied in a future communication system, which is not limited in the present disclosure.

In a wireless communication system, a basic workflow may generally include the following.

At a transmitting end, a transmitter (also referred to as the transmitting end or a sending device) may encode and modulate a source bitstream to acquire modulated symbols. Pilot symbol(s) may be inserted into the modulated symbols. The pilot symbol(s) may be used for channel estimation and symbol detection at a receiving end (also referred to as a receiver or receiving device). Finally, a transmitted signal may be formed, and may further arrive at the receiving end through a channel. At the receiving end, the receiver may firstly use the pilot(s) (understood in the same sense as the pilot signal(s) or pilot symbol(s)) for channel estimation; and further feedback channel state information (CSI) to the sending end through a feedback link, which enables the transmitter to adjust at least one of channel coding, modulation, pre-coding, etc. Finally, through the operations such as symbol detection, demodulation and channel decoding, the receiver may acquire a final recovered bitstream.

Due to the complexity and time-variability of the wireless channel environment, in the wireless communication system, the estimation and recovery for the wireless channel by the receiver may affect the final data recovery performance.

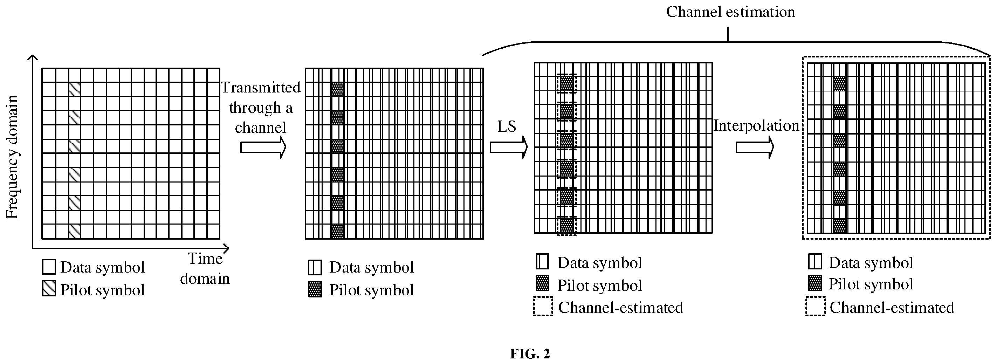

FIG. 2 is a schematic diagram of a channel estimation and recovery process according to an embodiment of the present disclosure. As shown in FIG. 2, the transmitter allocates pilot symbols (reference signal) known to the receiver and data symbols at different resource positions (e.g., in time domain and frequency domain). For example, the reference signal includes at least one of the following: a channel state information reference signal (CSI-RS), a demodulation reference signal (DMRS), a phase tracking reference signal (PTRS or PT-RS), a sounding reference signal (SRS), a synchronization signal block (SSB), a positioning reference signal (PRS), etc. Herein, the SSB may also be referred to as a synchronization signal/physical broadcast channel block (SS/PBCH block). After the transmission to the receiving end through the channel, for the channel estimation phase, the receiver may estimate channel information at the resource position in which the pilot symbol is placed based on the real pilot (i.e., the pilot symbol known to the receiver) and the received pilot (i.e., the pilot symbol received by the receiver). Additionally, based on the estimated channel information at the pilot positions, the receiver may recover full channel information (e.g., using an interpolation algorithm) for subsequent channel information feedback or data recovery, etc. Optionally, a manner for estimating the channel information may include at least one of the following: least squares (LS), linear minimum mean square error (LMMSE), etc.

In NR, the data symbol and the pilot symbol (i.e., the reference signal) are placed at different resource positions.

In any embodiment of the present disclosure, any two of the pilot signal, the reference signal and the control signal may be interchanged with each other.

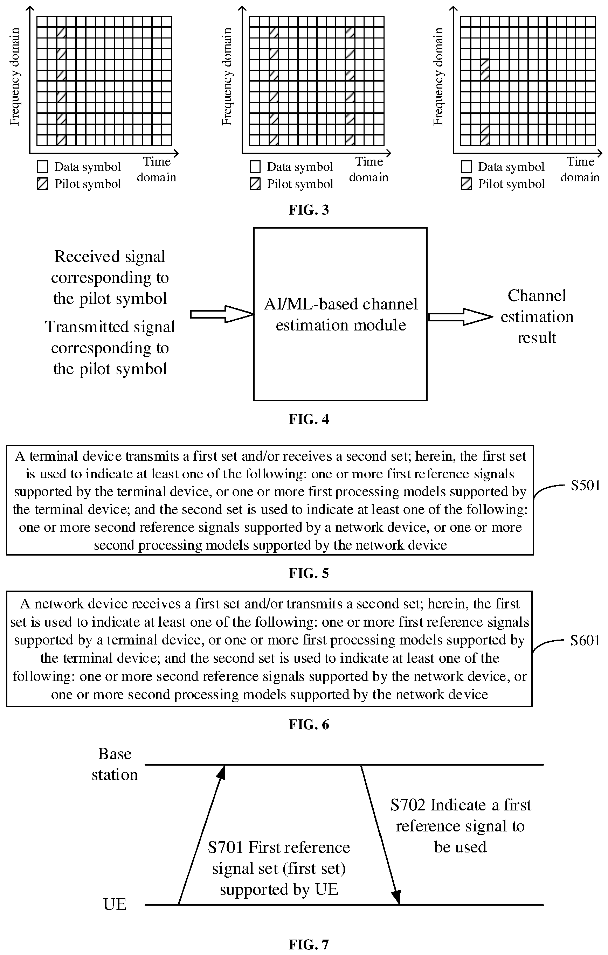

FIG. 3 is a schematic diagram of patterns for resource allocation of data symbols and pilot symbols according to an embodiment of the present disclosure. As shown in FIG. 3, on time-domain and/or frequency-domain and/or code-domain resources, the data symbol and the pilot symbol are independent and orthogonal to each other. That is, at a same resource position, only one of the data symbol and the pilot symbol can be arranged. Different patterns for resource allocation may be adapted to different wireless environments. For example, when a moving speed of a terminal device is high and the time variation of channel characteristic is relatively fast, the pilot symbols need to be arranged more densely in the time-domain dimension to ensure the channel estimation quality of the entire channel.

It should be noted that, although FIG. 3 illustrates only three patterns for resource allocation of the data symbol and pilot symbol, there may be many other patterns for resource allocation of the data symbol and pilot symbol. The pattern for resource allocation of the data symbol and pilot symbol is not limited in the embodiments of the present disclosure.

Based on the currently common pilot configuration, some solutions may implement channel estimation by using an artificial intelligence (AI)/machine learning (ML)-based neural network.

FIG. 4 is a schematic diagram of channel estimation according to an embodiment of the present disclosure. As shown in FIG. 4, the channel estimation in FIG. 4 is implemented through an AI/ML-based channel estimation module, which may be implemented through at least one of the following: a deep neural network (DNN), a convolutional neural network (CNN), a fully convolutional network (FCN), a recurrent neural network (RNN), or a transformer neural network, etc.

The received signal corresponding to the pilot symbol (i.e., the pilot signal received by the receiver) and the transmitted signal corresponding to the pilot symbol (i.e., the pilot symbol known to the receiver) are the input of the AI/ML-based channel estimation module. Moreover, a result of channel estimation is the output of the AI/ML-based channel estimation module. The result of channel estimation may be a result of channel estimation at the pilot position, or may be a result of channel estimation of the entire channel.

In the related technologies, the pilot signal and the data signal are orthogonally arranged in the time-domain resource, the frequency-domain resource, and the code-domain resource. That is, given a fixed amount of total transmission resources, an increase in the resource overhead required for the pilot means a decrease in the resources for data transmission, resulting in relatively low utilization of data transmission resources.

The embodiments of the present disclosure propose that the pilot signal and the data signal may be transmitted in a non-orthogonal manner. For example, the pilot and the data may be simultaneously transmitted on the same time-domain resource and frequency-domain resource. From the mixed transmission of the pilot and the data, the receiving end may achieve effective channel estimation or data reception. Optionally, the receiving end may employ an advanced receiver (e.g., AI/ML receiver) to achieve the effective channel estimation or data reception from the mixed transmission of the pilot and the data.

In some scenarios, when adopting the above scheme of the mixed transmission of the pilot signal and the data signal, there is a strong association between the transmission scheme and the reception scheme of the pilot signal. For example, if a first scheme is used for pilot transmission but the receiver does not adopt a first reception and processing scheme that matches the first scheme for pilot transmission, the receiver failure or significant degradation in receiver performance may be caused.

Based on the above problems, different terminal devices may support different superimposed reference signal, and the superimposed reference signals that can be received and processed by different terminal devices may also be different. This can be due to factors such as differences in the terminal device capabilities, differences in the models used by the terminal devices to process the superimposed pilots, as well as differences in the supportive degrees for the superimposed reference signals under different conditions and scenarios. Similarly, different network devices may support different superimposed reference signals, and the superimposed reference signals that can be received and processed by different network devices may also be different. This can be due to factors such as differences in the network device capabilities, differences in the models used by the network devices to process the superimposed pilots, as well as differences in the supportive degrees for the superimposed reference signals under different conditions and scenarios. Compared with a conventional sending and receiving process of the reference signal, a specific superimposed reference signal can only be used in the system when both the terminal device and the network device support the transmission, reception and processing of the specific superimposed reference signal. To achieve the above objectives, it is necessary to determine the available superimposed pilot through capability interaction and information interaction between the terminal device and the network device.

In any embodiment of the present disclosure, the terminal device may include a UE, and the network device may include a base station.

To facilitate the understanding of the technical solutions in the embodiments of the present disclosure, the technical solutions of the present disclosure are described in detail below through specific embodiments. The above solution(s) in any one or more embodiments, as optional solution(s), may be combined with any one of the technical solutions in the embodiments of the present disclosure, and all of the combinations shall fall within the scope of protection of the embodiments of the present disclosure. The embodiments of the present disclosure include at least part of the following contents.

In some embodiments of the present disclosure, the terminal device sends a first set and/or receives a second set; and the network device receives the first set and/or sends the second set.

Herein, the first set is used to indicate at least one of the following: one or more first signals supported by the terminal device, or one or more first processing models supported by the terminal device. The first signal is non-orthogonally transmitted with a second signal; and the first processing model is used to process at least one of the following: the first signal and the second signal that are non-orthogonally transmitted, or the first signal.

Herein, the second set is used to indicate at least one of the following: one or more third signals supported by the network device, or one or more second processing models supported by the network device. The third signal is non-orthogonally transmitted with the second signal; and the second processing model is used to process at least one of the following: the third signal and the second signal that are non-orthogonally transmitted; or the third signal.

Optionally, the second signal may be non-orthogonally transmitted with other signal(s), which may include the first signal and/or the third signal. Optionally, the other signal and the second signal may be different types of signals. For example, the other signal may be a reference signal, and the second signal may be a data signal. For another example, the other signal may be a data signal, and the second signal may be a reference signal. For yet another example, the other signal may be a signal acquired through a first coding mode and/or a first modulation mode, and the second signal may be a signal acquired through a second coding mode and/or a second modulation mode. Optionally, the other signal may be a signal corresponding to a first service, and the second signal may be a signal corresponding to a second service.

The following illustrates a communication method in the embodiments of the present disclosure by taking the second signal as the data signal and the other signal as the reference signal. It should be noted that, in other embodiments, the second signal and/or the other signal may be another signal listed or not listed above, and specific contents of the second signal and the other signal are not limited in the embodiments of the present disclosure.

In some embodiments of the present disclosure, the terminal device may non-orthogonally transmit the specific signal and the data signal; and/or the terminal device may process the specific signal and the data signal that are non-orthogonally transmitted; and/or the terminal device may process the specific signal that is non-orthogonally transmitted with the data signal. Optionally, the specific signal may include at least one of the following: a fifth reference signal and/or a sixth reference signal described below.

Optionally, the fifth reference signal may be indicated by the network device to the terminal device. Optionally, the sixth reference signal may be indicated by the terminal device to the network device. Optionally, the fifth reference signal and the sixth reference signal may be described with reference to the following embodiments.

In some embodiments of the present disclosure, the network device may non-orthogonally transmit the specific signal and the data signal; and/or the network device may process the specific signal and the data signal that are non-orthogonally transmitted; and/or the network device may process the specific signal that is non-orthogonally transmitted with the data signal. Optionally, the specific signal may include at least one of the following: the fifth reference signal and/or the sixth reference signal described below.

FIG. 5 is a schematic flowchart of a communication method according to an embodiment of the present disclosure. As shown in FIG. 5, the method is applied to a terminal device, and the method includes an operation S501.

At block S501, the terminal device sends a first set and/or receives a second set.

FIG. 6 is a schematic flowchart of another communication method according to an embodiment of the present disclosure. As shown in FIG. 6, the method is applied to a network device, and the method includes an operation S601.

At block S601, the network device receives a first set and/or sends a second set.

Herein, the first set is used to indicate at least one of the following: one or more first reference signals supported by the terminal device; or one or more first processing models supported by the terminal device. In some embodiments, the first reference signal is non-orthogonally transmitted with a data signal; and the first processing model is used to process at least one of the following: the first reference signal and the data signal that are non-orthogonally transmitted; or the first reference signal.

Herein, the second set is used to indicate at least one of the following: one or more second reference signals supported by the network device; or one or more second processing models supported by the network device. In some embodiments, the second reference signal is non-orthogonally transmitted with the data signal; and the second processing model is used to process at least one of the following: the second reference signal and the data signal that are non-orthogonally transmitted; or the second reference signal.

Optionally, the transmission may include a sending process and/or a receiving process. Optionally, the non-orthogonal transmission of the data signal with the other signal may include that: the data signal and the other signal are sent non-orthogonally; and/or the data signal and the other signal are received non-orthogonally.

Optionally, in any embodiment of the present disclosure, the reference signal that is non-orthogonally transmitted with the data signal may include at least one of the following: a first reference signal, a second reference signal, a third reference signal, a fourth reference signal, a fifth reference signal, or a sixth reference signal.

In any embodiment of the present disclosure, the reference signal being non-orthogonally transmitted with the data signal may be replaced by at least one of the following: the reference signal and the data signal being simultaneously transmitted; the reference signal and the data signal being transmitted in mixture; the reference signal and the data signal being transmitted in superimposition; the reference signal and the data signal being transmitted on the same resource; or the reference signal and the data signal being transmitted on a resource element (RE), etc. In some embodiments of the present disclosure, the reference signal may include at least one of the following, unless otherwise specified: a first reference signal, a second reference signal, a third reference signal, a fourth reference signal, a fifth reference signal, or a sixth reference signal.

Optionally, processing the reference signal and the data signal that are non-orthogonally transmitted may include at least one of the following: parsing the reference signal and/or the data signal from the reference signal and the data signal that are non-orthogonally transmitted; or determining a result of channel estimation. Optionally, in any embodiment of the present disclosure, the result of channel estimation may include at least one of the following: a result of channel estimation for the reference signal, a result of partial time-domain channel estimation, a result of full time-domain channel estimation, a result of partial frequency-domain channel estimation, a result of full frequency-domain channel estimation, a result of channel estimation corresponding to an antenna, a result of channel estimation corresponding to an angle, or a result of full channel estimation. For example, the result of channel estimation may be the result of channel estimation for the reference signal. For another example, the result of channel estimation may be the result of full channel estimation. For yet another example, the result of channel estimation may be the result of full frequency-domain channel estimation. The result of channel estimation is not limited in the embodiments of the present disclosure.

Optionally, the non-orthogonally transmitted reference signal and data signal that are processed by the terminal device or the reference signal processed by the terminal device may be downlink signal(s). Optionally, the non-orthogonally transmitted reference signal and data signal that are processed by the network device or the reference signal processed by the network device may be uplink signal(s).

Optionally, the terminal device may non-orthogonally send the reference signal and the data signal, and the network device may non-orthogonally receive the reference signal and the data signal; and/or the terminal device may process the reference signal and the data signal that are non-orthogonally transmitted; and/or the terminal device may process the reference signal. Optionally, the network device may non-orthogonally send the reference signal and the data signal, and the terminal device may non-orthogonally receive the reference signal and the data signal; and/or the network device may process the reference signal and the data signal that are non-orthogonally transmitted; and/or the network device may process the reference signal.

Optionally, the reference signals may be of a single type or of multiple types. For different types of signals, at least one of the following may be different: a signal pattern, a transmission power setting, an applicable cell type, an applicable scenario, a moving speed of the terminal device, a transmission configuration, an antenna configuration, channel information, or a format sequence.

Optionally, the one or more first reference signals and the first reference signal(s) associated with the one or more first processing models may have no intersection, may be partially identical, or may be completely identical.

Optionally, the one or more first reference signals supported by the terminal device may include: one or more first reference signals that are supported to be transmitted by the terminal device; and/or one or more first reference signals that are supported to be processed by the terminal device. Herein, the first reference signal is non-orthogonally transmitted with the data signal.

Optionally, the one or more first reference signals supported by the terminal device may include: one or more first reference signals from the one or more first reference signals and the data signal that are supported to be orthogonally transmitted by the terminal device; and/or, one or more first reference signals from the orthogonally transmitted one or more first reference signals and the data signal that are supported to be processed by the terminal device; and/or, one or more first reference signals that are supported to be processed by the terminal device, where the first reference signal is non-orthogonally transmitted with the data signal.

Optionally, the first processing model may be used to process the first reference signal and the data signal that are non-orthogonally transmitted, which may be downlink signals. Optionally, the first processing model may be used to process the first reference signal that is non-orthogonally transmitted with the data signal, which may be a downlink signal.

Optionally, the first processing model(s) may have a one-to-one correspondence, a one-to-many correspondence, or a many-to-one correspondence with the first reference signal(s). Exemplarily, for each of the one or more first processing models, the first processing model may be associated with a respective first reference signal corresponding to the first processing model.

Optionally, the first reference signal(s) associated with the one or more first processing models may be replaced with: the first reference signal(s) that are processed by using the one or more first processing models; and/or, the first reference signal(s) from the non-orthogonally transmitted first reference signal(s) and data signal that are processed by using the one or more first processing models.

Optionally, in any embodiment of the present disclosure, the first processing model may include a first AI/ML processing model, or may not be an AI/ML processing model. Optionally, through the first processing model processing the first reference signal and the data signal that are non-orthogonally transmitted, and/or the first processing model processing the first reference signal that is non-orthogonally transmitted with the data signal, the first reference signal and/or the data signal may be parsed, and/or the result of channel estimation corresponding to the first reference signal may be determined.

Optionally, in any embodiment of the present disclosure, the processing model may be replaced with at least one of the following: a processing function, or a processing mode.

Optionally, the one or more second reference signals and the second reference signal(s) associated with the one or more second processing models may have no intersection, may be partially identical, or may be completely identical.

Optionally, the one or more second reference signals supported by the network device may include: one or more second reference signals that are supported to be transmitted by the network device; and/or one or more second reference signals that are supported to be processed by the network device.

Optionally, the one or more second reference signals supported by the network device may include: one or more second reference signals from the one or more second reference signals and the data signal that are supported to be orthogonally transmitted by the network device; and/or, one or more second reference signals from the orthogonally transmitted one or more second reference signals and the data signal that are supported to be processed by the network device; and/or, one or more second reference signals that are supported to be processed by the network device, where the second reference signal is non-orthogonally transmitted with the data signal.

Optionally, the second processing model may be used to process the second reference signal and the data signal that are non-orthogonally transmitted, which may be downlink signals. Optionally, the second processing model may be used to process the second reference signal that is non-orthogonally transmitted with the data signal, which may be a downlink signal.

Optionally, the second processing model(s) may have a one-to-one correspondence, a one-to-many correspondence, or a many-to-one correspondence with the second reference signal(s). Exemplarily, for each of the one or more second processing models, the second processing model may be associated with a respective second reference signal corresponding to the second processing model.

Optionally, the second reference signal(s) associated with the one or more second processing models may be replaced with: the second reference signal(s) that are processed by using the one or more second processing models; and/or, the second reference signal(s) from the non-orthogonally transmitted second reference signal(s) and data signal that are processed by using the one or more second processing models.

Optionally, in any embodiment of the present disclosure, the second processing model may include a second AI/ML processing model, or may not be an AI/ML processing model. Optionally, through the second processing model processing the second reference signal and the data signal that are non-orthogonally transmitted, and/or, the second processing model processing the second reference signal that is non-orthogonally transmitted with the data signal, the second reference signal and/or the data signal may be parsed, and/or the result of channel estimation corresponding to the second reference signal may be determined.

In the embodiments of the present disclosure, the terminal device sends the first set and/or receives the second set. Herein, the first set is used to indicate at least one of the following: one or more first reference signals supported by the terminal device; or one or more first processing models supported by the terminal device. The first reference signal is non-orthogonally transmitted with the data signal; and the first processing model is used to process at least one of the following: the first reference signal and the data signal that are non-orthogonally transmitted; or the first reference signal. Additionally, the second set is used to indicate at least one of the following: one or more second reference signals supported by the network device; or one or more second processing models supported by the network device. The second reference signal is non-orthogonally transmitted with the data signal; and the second processing model is used to process at least one of the following: the second reference signal and the data signal that are non-orthogonally transmitted; or the second reference signal. In such way, since the data signal and the reference signal are non-orthogonally transmitted, the data signal can be transmitted with the reference signal in superimposition on fixed resources. The resources for the data signal will not change with the changes in the resources for the reference signal, thereby achieving high resource utilization efficiency. Furthermore, since the terminal device sends the first reference signal(s) and/or processing model(s) that are supported by the terminal device, and/or the terminal device receives the second reference signal(s) and/or processing model(s) that are supported by the network device, the terminal device and the network device can perform the signal transmission and/or processing based on the supported reference signal(s) and/or processing model(s), which can avoid a situation where the terminal device sends orthogonally transmitted reference signal and data signal that cannot be received and/or processed by the network device, or a situation where the network device sends orthogonally transmitted reference signal and data signal that cannot be received and/or processed by the terminal device. Thus, the present disclosure can improve the reliability of information transmission.

In some embodiments, on the terminal device side, the method may further include that: the terminal device receives a third set.

In some embodiments, on the network device side, the method further may further include that: the network device sends a third set.

Optionally, the third set may be a subset of the first set.

Optionally, the third set may be used to indicate at least one of the following: one or more third reference signals supported by the network device; or one or more third processing models supported by the network device. The third reference signal is non-orthogonally transmitted with the data signal; and the third processing model is used to process at least one of the following: the third reference signal and the data signal that are non-orthogonally transmitted; or the third reference signal.

Optionally, the third set may be used to indicate: at least part of the one or more first reference signals and/or at least part of the one or more first processing models. Optionally, the at least part of the one or more first reference signals may be one or more third reference signals. Optionally, the at least part of the one or more first processing models may be one or more third processing models.

Optionally, the one or more third reference signals and the third reference signal(s) associated with the one or more third processing models may have no intersection, may be partially identical, or may be completely identical.

Optionally, the one or more third reference signals supported by the network device may include: one or more third reference signals that are supported to be transmitted by the network device; and/or one or more third reference signals that are supported to be processed by the network device.

Optionally, the one or more third reference signals supported by the network device may include: one or more third reference signals from the one or more third reference signals and the data signal that are supported to be orthogonally transmitted by the network device; and/or, one or more third reference signals from the orthogonally transmitted one or more third reference signals and the data signal that are supported to be processed by the network device; and/or, one or more third reference signals that are supported to be processed by the network device, where the third reference signal is non-orthogonally transmitted with the data signal.

Optionally, the third processing model may be used to process the third reference signal and the data signal that are non-orthogonally transmitted, which may be downlink signals. Optionally, the third processing model may be used to process the third reference signal that is non-orthogonally transmitted with the data signal, which may be a downlink signal.

Optionally, the third processing model(s) may have a one-to-one correspondence, a one-to-many correspondence, or a many-to-one correspondence with the third reference signal(s). Exemplarily, for each of the one or more third processing models, the third processing model may be associated with a respective third reference signal corresponding to the third processing model.

Optionally, the third reference signal(s) associated with the one or more third processing models may be replaced with: the third reference signal(s) that are processed by using the one or more third processing models; and/or, the third reference signal(s) from the non-orthogonally transmitted third reference signal(s) and data signal that are processed by using the one or more third processing models.

Optionally, in any embodiment of the present disclosure, the third processing model may include a third AI/ML processing model, or may not be an AI/ML processing model. Optionally, through the third processing model processing the third reference signal and the data signal that are non-orthogonally transmitted, and/or the third processing model processing the third reference signal that is non-orthogonally transmitted with the data signal, the third reference signal and/or the data signal may be parsed, and/or the result of channel estimation corresponding to the third reference signal may be determined.

In some embodiments, the third set may be included or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (Al)/machine learning (ML) dedicated downlink channel, or capability indication information of the network device.

Optionally, the third set may be included or carried in the broadcast message. Optionally, the third set may be included or carried in the RRC message. Optionally, the third set may be included or carried in the MAC CE. Optionally, the third set may be included or carried in the DCI. Optionally, the third set may be included or carried in the downlink message during the random access procedure. Optionally, the third set may be included or carried in the PDCCH. Optionally, the third set may be included or carried in the PDSCH. Optionally, the third set may be included or carried in the AI/ML dedicated downlink channel. Optionally, the third set may be included or carried in the capability indication information of the network device.

Optionally, in any embodiment of the present disclosure, the broadcast message may include at least one of the following: a master information block (MIB), or a system information block (SIB) message. Optionally, the SIB message may include at least one of the following: SIB1, or SIBx. Here, X is an integer greater than or equal to 1.

Optionally, in any embodiment of the present disclosure, the downlink message during the random access procedure may include at least one of the following: MsgB, Msg2, or Msg4.

In some embodiments, on the terminal device side, the method may further include that: the terminal device sends a fourth set.

In some embodiments, on the network device side, the method may further include that: the network device receives a fourth set.

Optionally, the fourth set may be a subset of the second set.

Optionally, the fourth set may be used to indicate at least one of the following: one or more fourth reference signals supported by the terminal device; or one or more fourth processing models supported by the terminal device. The fourth reference signal is non-orthogonally transmitted with the data signal; and the fourth processing model is used to process at least one of the following: the fourth reference signal and the data signal that are non-orthogonally transmitted; or the fourth reference signal.

Optionally, the fourth set may be used to indicate: at least part of the one or more second reference signals and/or at least part of the one or more second processing models. Optionally, the at least part of the one or more second reference signals may be one or more fourth reference signals. Optionally, the at least part of the one or more second processing models may be one or more fourth processing models.

Optionally, the one or more fourth reference signals and the fourth reference signal(s) associated with the one or more fourth processing models may have no intersection, may be partially identical, or may be completely identical.

Optionally, the one or more fourth reference signals supported by the terminal device may include: one or more fourth reference signals that are supported to be transmitted by the terminal device; and/or one or more fourth reference signals that are supported to be processed by the terminal device.

Optionally, the one or more fourth reference signals supported by the terminal device may include: one or more fourth reference signals from the one or more fourth reference signals and the data signal that are supported to be orthogonally transmitted by the terminal device; and/or, one or more fourth reference signals from the orthogonally transmitted one or more fourth reference signals and the data signal that are supported to be processed by the terminal device; and/or, one or more fourth reference signals that are supported to be processed by the terminal device, where the fourth reference signal is non-orthogonally transmitted with the data signal.

Optionally, the fourth processing model may be used to process the fourth reference signal and the data signal that are non-orthogonally transmitted, which may be downlink signals. Optionally, the fourth processing model may be used to process the fourth reference signal that is non-orthogonally transmitted with the data signal, which may be a downlink signal.

Optionally, the fourth processing model(s) may have a one-to-one correspondence, a one-to-many correspondence, or a many-to-one correspondence with the fourth reference signal(s). Exemplarily, for each of the one or more fourth processing models, the fourth processing model may be associated with a respective fourth reference signal corresponding to the third processing model.

Optionally, the fourth reference signal(s) associated with the one or more fourth processing models may be replaced with: the fourth reference signal(s) that are processed by using the one or more fourth processing models; and/or, the fourth reference signal(s) from the non-orthogonally transmitted fourth reference signal(s) and data signal that are processed by using the one or more fourth processing models.

Optionally, in any embodiment of the present disclosure, the fourth processing model may include a fourth AI/ML processing model, or may not be an AI/ML processing model. Optionally, through the fourth processing model processing the fourth reference signal and the data signal that are non-orthogonally transmitted, and/or the fourth processing model processing the fourth reference signal that is non-orthogonally transmitted with the data signal, the fourth reference signal and/or the data signal may be parsed, and/or the result of channel estimation corresponding to the fourth reference signal may be determined.

In some embodiments, the fourth set may be included or carried in at least one of the following: an RRC message, uplink control information (UCI), a uplink message during a random access procedure, a physical uplink control channel (PUCCH), a physical uplink shared channel (PUSCH), an AI/ML dedicated uplink channel, or capability reporting information of the terminal device.

Optionally, the fourth set may be included or carried in the RRC message. Optionally, the fourth set may be included or carried in the UCI. Optionally, the fourth set may be included or carried in the uplink message during the random access procedure. Optionally, the fourth set may be included or carried in the PUCCH. Optionally, the fourth set may be included or carried in the PUSCH. Optionally, the fourth set may be included or carried in the AI/ML dedicated uplink channel. Optionally, the fourth set may be included or carried in the capability reporting information of the terminal device.

Optionally, in any embodiment of the present disclosure, the uplink message during the random access procedure may include at least one of the following: MsgA, or Msg3.

In some embodiments, on the terminal device side, the method may further include that: the terminal device receives first indication information.

In some embodiments, on the network device side, the method may further include that: the network device sends first indication information.

Herein, the first indication information may indicate a fifth reference signal; and the fifth reference signal may be included in at least one of the following: the one or more first reference signals, the one or more first reference signals associated with the one or more first processing models, the one or more fourth reference signals, or the one or more fourth reference signals associated with one or more fourth processing models. Optionally, the first indication information may include an identifier of the fifth reference signal.

Optionally, in such embodiments, the fifth reference signal may be a signal supported by the network device and/or a signal supported by the terminal device. Optionally, in any embodiment of the present disclosure, the supported signal may include the signal supported to be transmitted and/or the signal supported to be processed.

In some embodiments, in a case where the network device sends the first indication information and the terminal device receives the first indication information, the network device may perform at least one of the following: non-orthogonal transmission of the fifth reference signal and the data signal; processing for the fifth reference signal and the data signal that are non-orthogonally transmitted; or processing for the fifth reference signal, where the fifth reference signal is non-orthogonally transmitted with the data signal.

In some embodiments, on the terminal device side, the method may further include that: the terminal device sends second indication information.

In some embodiments, on the network device side, the method may further include that: the network device receives second indication information.

Herein, the second indication information may indicate a sixth reference signal; and the sixth reference signal may be included in at least one of the following: the one or more second reference signals, the one or more second reference signals associated with the one or more second processing models, the one or more third reference signals, or the one or more third reference signals associated with one or more third processing models. Optionally, the second indication information may include an identifier of the sixth reference signal.

Optionally, in such embodiments, the sixth reference signal may be a signal supported by the terminal device and/or a signal supported by the network device.

In some embodiments, in a case where the network device sends the second indication information and the terminal device receives the second indication information, the network device may perform at least one of the following: non-orthogonally transmission of the sixth reference signal and the data signal; processing for the sixth reference signal and the data signal that are non-orthogonally transmitted; or processing for the sixth reference signal, where the sixth reference signal is non-orthogonally transmitted with the data signal.

In some embodiments, on the terminal device side, the method may further include that: the terminal device receives third indication information.

In some embodiments, on the network device side, the method may further include that: the network device sends third indication information.

Herein, the third indication information may indicate to report the first set.

In some embodiments, the third indication information may be included or carried in at least one of the following: a broadcast message, an RRC message, an MAC CE, DCI, a downlink message during a random access procedure, a PDCCH, a PDSCH, or an AI/ML dedicated downlink channel.

Optionally, the third indication information may be included or carried in the broadcast message. Optionally, the third indication information may be included or carried in the RRC message. Optionally, the third indication information may be included or carried in the MAC CE. Optionally, the third indication information may be included or carried in the DCI. Optionally, the third indication information may be included or carried in the downlink message during the random access procedure. Optionally, the third indication information may be included or carried in the PDCCH. Optionally, the third indication information may be included or carried in the PDSCH. Optionally, the third indication information may be included or carried in the AI/ML dedicated downlink channel. Optionally, the third indication information may be included or carried in capability indication information of the network device.

In some embodiments, on the terminal device side, the method may further include that: the terminal device sends fourth indication information.

In some embodiments, on the network device side, the method may further include that: the network device receives fourth indication information.

Herein, the fourth indication information may indicate the network device to send the second set.

In some embodiments, the fourth indication information may be included or carried in at least one of the following: an RRC message, UCI, an uplink message during a random access procedure, a PUCCH, a PUSCH, or an AI/ML dedicated uplink channel.

Optionally, the fourth indication information may be included or carried in the RRC message. Optionally, the fourth indication information may be included or carried in the UCI. Optionally, the fourth indication information may be included or carried in the uplink message during the random access procedure. Optionally, the fourth indication information may be included or carried in the PUCCH. Optionally, the fourth indication information may be included or carried in the PUSCH. Optionally, the fourth indication information may be included or carried in the AI/ML dedicated uplink channel.

In some embodiments, on the terminal device side, the method may further include that: the terminal device sends first capability information.

In some embodiments, on the network device side, the method may further include that: the network device receives first capability information.

Herein, the first capability information may indicate that the terminal device supports to non-orthogonally transmit the signal, and/or supports to process the signal that is non-orthogonally transmitted.

Optionally, in any embodiment of the present disclosure, the terminal device or the network device supporting to process the signal that is non-orthogonally transmitted may include at least one of the following: the terminal device or the network device supporting to process two or more signals that are non-orthogonally transmitted; or the terminal device or the network device supporting to process one signal that is non-orthogonally transmitted with one or more other signals. For example, the terminal device or the network device supporting to process the signal that is non-orthogonally transmitted may include at least one of the following: the terminal device or the network device supporting to process two signals that are non-orthogonally transmitted; or the terminal device or the network device supporting to process one signal that is non-orthogonally transmitted with another signal.

Optionally, in any embodiment of the present disclosure, the terminal device supporting to non-orthogonally transmit the signal and/or supporting to process the signal that is non-orthogonally transmitted may include that: the terminal device supports to non-orthogonally transmit the data signal and at least one first reference signal; and/or, the terminal device supports to process the data signal and the at least one first reference signal that are non-orthogonally transmitted; and/or, the terminal device supports to process the at least one first reference signal, where the first reference signal is non-orthogonally transmitted with the data signal. The at least one first reference signal may include the fifth reference signal. Optionally, the at least one first reference signal may include: the one or more first reference signals, and/or the one or more first reference signals associated with the one or more first processing models.

In some embodiments, the first capability information may be included or carried in at least one of the following: an RRC message, UCI, an uplink message during a random access procedure, a PUCCH, a PUSCH, an AI/ML dedicated uplink channel, or capability reporting information of the terminal device.

Optionally, the first capability information may be included or carried in the RRC message. Optionally, the first capability information may be included or carried in the UCI. Optionally, the first capability information may be included or carried in the uplink message during the random access procedure. Optionally, the first capability information may be included or carried in the PUCCH. Optionally, the first capability information may be included or carried in the PUSCH. Optionally, the first capability information may be included or carried in the AI/ML dedicated uplink channel. Optionally, the first capability information may be included or carried in the capability reporting information of the terminal device.

In some embodiments, on the terminal device side, the method may further include that: the terminal device receives second capability information.

In some embodiments, on the network device side, the method may further include that: the network device sends second capability information.

Herein, the second capability information may indicate that the network device supports to non-orthogonally transmit the signal, and/or supports to process the signal that is non-orthogonally transmitted.

Optionally, in any embodiment of the present disclosure, the network device supporting to non-orthogonally transmit the signal and/or supporting to process the signal that is non-orthogonally transmitted may include that: the network device supports to non-orthogonally transmit the data signal and at least one second reference signal; and/or, the network device supports to process the data signal and the at least one second reference signal that are non-orthogonally transmitted; and/or, the network device supports to process the at least one second reference signal, where the second reference signal is non-orthogonally transmitted with the data signal. The at least one second reference signal may include the sixth reference signal. Optionally, the at least one second reference signal may include: the one or more second reference signals, and/or the one or more second reference signals associated with the one or more second processing models.

In some embodiments, the second capability information may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

Optionally, the second capability information may be included or carried in the broadcast message. Optionally, the second capability information may be included or carried in the RRC message. Optionally, the second capability information may be included or carried in the MAC CE. Optionally, the second capability information may be included or carried in the DCI. Optionally, the second capability information may be included or carried in the downlink message during the random access procedure. Optionally, the second capability information may be included or carried in the PDCCH. Optionally, the second capability information may be included or carried in the PDSCH. Optionally, the second capability information may be included or carried in the AI/ML dedicated downlink channel. Optionally, the second capability information may be included or carried in the capability indication information of the network device.

The following provides descriptions of the first set.

In some embodiments, the first set may be included or carried in at least one of the following: an RRC message, UCI, an uplink message during a random access procedure, a PUCCH, a PUSCH, an AI/ML dedicated uplink channel, or capability reporting information of the terminal device.

Optionally, the first set may be included or carried in the RRC message. Optionally, the first set may be included or carried in the UCI. Optionally, the first set may be included or carried in the uplink message during the random access procedure. Optionally, the first set may be included or carried in the PUCCH. Optionally, the first set may be included or carried in the PUSCH. Optionally, the first set may be included or carried in the AI/ML dedicated uplink channel. Optionally, the first set may be included or carried in the capability reporting information of the terminal device.

In some embodiments, the one or more first reference signals may include one or more first uplink signals; and/or the one or more first reference signals may include one or more first downlink signals.

Optionally, the one or more first reference signals may include one or more first uplink signals. Optionally, the one or more first reference signals may include one or more first downlink signals. Optionally, the one or more first reference signals may include one or more first uplink signals, and the one or more first reference signals may also include one or more first downlink signals.

Optionally, in any embodiment of the present disclosure, the one or more first reference signal associated with the one or more first processing models may be downlink signal(s).

In some embodiments, the first set may include at least one of the following: one or more identifiers of one or more first uplink signals, one or more identifiers of one or more first downlink signals, or one or more identifiers of the one or more first processing models.

Optionally, the first set may include one or more identifiers of one or more first uplink signals and/or one or more identifiers of one or more first downlink signals. Optionally, the first set may include one or more identifiers of one or more first uplink signals and/or one or more identifiers of one or more first downlink signals, and also include one or more identifiers of one or more first processing models. Optionally, the first set including the one or more identifiers of the one or more first uplink signals and/or the one or more identifiers of the one or more first downlink signals may specifically include that: the first set includes the one or more identifiers of the one or more first uplink signals; or the first set includes the one or more identifiers of the one or more first downlink signals; or the first set includes the one or more identifiers of the one or more first uplink signals and the one or more identifiers of the one or more first downlink signals.

In some embodiments, the first set may be used to indicate one or more types of first uplink signal sets, and/or the first set may include one or more identifiers of the one or more types of first uplink signal sets.

In some embodiments, for different types of first uplink signal sets, at least one of the following may be different: a signal pattern, a transmission power setting, an applicable cell type, an applicable scenario, a moving speed of the terminal device, a transmission configuration, an antenna configuration, channel information, or a format sequence.

Optionally, in any embodiment of the present disclosure, the one or more types of first uplink signal sets may be replaced with one or more types of first uplink signals; or may be replaced with one or more first uplink signal sets, where different first uplink signal sets may correspond to different types. Optionally, in any embodiment of the present disclosure, the different types of first uplink signal sets may be replaced with different types of first uplink signals; or may be replaced with different first uplink signal sets, where different first uplink signal sets may correspond to different types. Optionally, the first uplink signals in one type of first uplink signal set may belong to the same type.

Optionally, different types of first uplink signal sets may correspond to different signal patterns. Optionally, different types of first uplink signal sets may correspond to different transmission power settings. Optionally, different types of first uplink signal sets may correspond to different applicable cell types. Optionally, different types of first uplink signal sets may correspond to different applicable scenarios. Optionally, different types of first uplink signal sets may correspond to different moving speeds of the terminal device. Optionally, different types of first uplink signal sets may correspond to different transmission configurations. Optionally, different types of first uplink signal sets may correspond to different antenna configurations. Optionally, different types of first uplink signal sets may correspond to different channel information. Optionally, different types of first uplink signal sets may correspond to different signal patterns and different transmission power settings.

Optionally, in any embodiment of the present disclosure, the transmission power setting may be replaced with at least one of the following: a transmission power characteristic, or a transmission power configuration.

Optionally, the cell type may include at least one of the following: a macro cell, an ordinary cell, or a small cell, etc. Optionally, the application scenario may include at least one of the following: indoor, outdoor, a park, a school, a factory, a warehouse, a high-speed rail, or a subway, etc. Optionally, the moving speed may include at least one of the following: a low speed, a medium-low speed, a medium speed, a medium-high speed, a high speed, a ultra-high speed, a speed range, or a speed value, etc. Optionally, the transmission configuration may include at least one of the following: the number of frequency-domain resources, a bandwidth, a subband, the number of time-domain resources, a slot, a symbol, a subframe, or a frame, etc. Optionally, the antenna configuration may include at least one of the following: a transmitting antenna port configuration, a receiving antenna port configuration, or a port identifier, etc. Optionally, the channel information may include at least one of the following: a line of sight (LOS) channel, a not line of sight (NLOS) channel, a multipath characteristic, or a frequency selectivity characteristic. Optionally, in any embodiment of the present disclosure, the channel information may be replaced with the channel characteristic.

In some embodiments, the first set may be used to indicate one or more types of first downlink signal sets; and/or the first set may include one or more identifiers of the one or more types of first downlink signal sets.

In some embodiments, for different types of first downlink signal sets, at least one of the following may be different: a signal pattern, a transmission power setting, an applicable cell type, an applicable scenario, a moving speed of the terminal device, a transmission configuration, an antenna configuration, channel information, or a format sequence.

Optionally, in any embodiment of the present disclosure, the one or more types of first downlink signal sets may be replaced with one or more types of first downlink signals; or may be replaced with one or more first downlink signal sets, where different first downlink signal sets may correspond to different types. Optionally, in any embodiment of the present disclosure, the different types of first downlink signal sets may be replaced with different types of first downlink signals; or may be replaced with different first downlink signal sets, where different first downlink signal sets may correspond to different types. Optionally, the first downlink signals in one type of first downlink signal set may belong to the same type.

Optionally, different types of first downlink signal sets may correspond to different signal patterns. Optionally, different types of first downlink signal sets may correspond to different transmission power settings. Optionally, different types of first downlink signal sets may correspond to different applicable cell types. Optionally, different types of first downlink signal sets may correspond to different applicable scenarios. Optionally, different types of first downlink signal sets may correspond to different moving speeds of the terminal device. Optionally, different types of first downlink signal sets may correspond to different transmission configurations. Optionally, different types of first downlink signal sets may correspond to different antenna configurations. Optionally, different types of first downlink signal sets may correspond to different channel information. Optionally, different types of first downlink signal sets may correspond to different signal patterns and different transmission power settings.

In some embodiments, the first set may be used to indicate one or more types of first processing models; and/or the first set may include one or more identifiers of the one or more types of first processing models.

In some embodiments, for the first reference signals associated with different types of first processing models, at least one of the following may be different: a signal pattern, a transmission power setting, an applicable cell type, an applicable scenario, a moving speed of the terminal device, a transmission configuration, an antenna configuration, channel information, or a format sequence.

Optionally, the first reference signals associated with different types of first processing models may correspond to different signal patterns. Optionally, the first reference signals associated with different types of first processing models may correspond to different transmission power settings. Optionally, the first reference signals associated with different types of first processing models may correspond to different applicable cell types. Optionally, the first reference signals associated with different types of first processing models may correspond to different applicable scenarios. Optionally, the first reference signals associated with different types of first processing models may correspond to different moving speeds of the terminal device. Optionally, the first reference signals associated with different types of first processing models may correspond to different transmission configurations. Optionally, the first reference signals associated with different types of first processing models may correspond to different antenna configurations. Optionally, the first reference signals associated with different types of first processing models may correspond to different channel information. Optionally, the first reference signals associated with different types of first processing models may correspond to different signal patterns and different transmission power settings.

Optionally, the above descriptions of the first set may be combined with each other, which is not limited in the embodiments of the present disclosure. For example, the first set may be used to indicate the one or more types of first uplink signal sets, and also used to indicate the one or more types of first downlink signal sets; and/or, the first set may include the one or more identifiers of the one or more types of first uplink signal sets, and also include the one or more identifiers of the one or more types of first downlink signal sets. For another example, the first set may include at least one of the following: the one or more identifiers of one or more first uplink signals; the one or more identifiers of one or more first downlink signals; or the one or more identifiers of one or more types of first processing models. For yet another example, the first set may include at least one of the following: the one or more identifiers of the one or more types of first uplink signal sets; the one or more identifiers of the one or more types of first downlink signal sets; or the one or more identifiers of the one or more types of first processing models.

The following provides descriptions of the second set.

In some embodiments, the second set may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

Optionally, the second set may be included or carried in the broadcast message. Optionally, the second set may be included or carried in the RRC message. Optionally, the second set may be included in or carried in the MAC CE. Optionally, the second set may be included or carried in the DCI. Optionally, the second set may be included or carried in the downlink message during the random access procedure. Optionally, the second set may be included or carried in the PDCCH. Optionally, the second set may be included or carried in the PDSCH. Optionally, the second set may be included or carried in the AI/ML dedicated downlink channel. Optionally, the second set may be included or carried in the capability indication information of the network device.

In some embodiments, the one or more second reference signals may include one or more second uplink signals; and/or the one or more second reference signals may include one or more second downlink signals.

Optionally, the one or more second reference signals may include one or more second uplink signals. Optionally, the one or more second reference signals may include one or more second downlink signals. Optionally, the one or more second reference signals may include one or more second uplink signals, and the one or more second reference signals may also include one or more second downlink signals.

Optionally, in any embodiment of the present disclosure, the one or more second reference signal associated with the one or more second processing models may be uplink signal(s).

In some embodiments, the second set may include at least one of the following: one or more identifiers of one or more second uplink signals, one or more identifiers of one or more second downlink signals, or one or more identifiers of the one or more second processing models.

Optionally, the second set may include one or more identifiers of one or more second uplink signals and/or one or more identifiers of one or more second downlink signals. Optionally, the second set may include one or more identifiers of one or more second uplink signals and/or one or more identifiers of one or more second downlink signals, and also include one or more identifiers of one or more second processing models. Optionally, the second set including the one or more identifiers of the one or more second uplink signals and/or the one or more identifiers of the one or more second downlink signals may specifically include that: the second set includes the one or more identifiers of the one or more second uplink signals; or the second set includes the one or more identifiers of the one or more second downlink signals; or the second set includes the one or more identifiers of the one or more second uplink signals and the one or more identifiers of the one or more second downlink signals.

In some embodiments, the second set may be used to indicate one or more types of second uplink signal sets, and/or the second set may include one or more identifiers of the one or more types of second uplink signal sets.

In some embodiments, for different types of second uplink signal sets, at least one of the following may be different: a signal pattern, a transmission power setting, an applicable cell type, an applicable scenario, a moving speed of the terminal device, a transmission configuration, an antenna configuration, channel information, or a format sequence.

Optionally, in any embodiment of the present disclosure, the one or more types of second uplink signal sets may be replaced with one or more types of second uplink signals; or may be replaced with one or more second uplink signal sets, where different second uplink signal sets may correspond to different types. Optionally, in any embodiment of the present disclosure, the different types of second uplink signal sets may be replaced with different types of second uplink signals; or may be replaced with different second uplink signal sets, where different second uplink signal sets may correspond to different types. Optionally, the second uplink signals in one type of second uplink signal set may belong to the same type.

Optionally, different types of second uplink signal sets may correspond to different signal patterns. Optionally, different types of second uplink signal sets may correspond to different transmission power settings. Optionally, different types of second uplink signal sets may correspond to different applicable cell types. Optionally, different types of second uplink signal sets may correspond to different applicable scenarios. Optionally, different types of second uplink signal sets may correspond to different moving speeds of the terminal device. Optionally, different types of second uplink signal sets may correspond to different transmission configurations. Optionally, different types of second uplink signal sets may correspond to different antenna configurations. Optionally, different types of second uplink signal sets may correspond to different channel information. Optionally, different types of second uplink signal sets may correspond to different signal patterns and different transmission power settings.

In some embodiments, the second set may be used to indicate one or more types of second downlink signal sets; and/or the second set may include one or more identifiers of the one or more types of second downlink signal sets.

In some embodiments, for different types of second downlink signal sets, at least one of the following may be different: a signal pattern, a transmission power setting, an applicable cell type, an applicable scenario, a moving speed of the terminal device, a transmission configuration, an antenna configuration, channel information, or a format sequence.

Optionally, in any embodiment of the present disclosure, the one or more types of second downlink signal sets may be replaced with one or more types of second downlink signals; or may be replaced with one or more second downlink signal sets, where different second downlink signal sets may correspond to different types. Optionally, in any embodiment of the present disclosure, the different types of second downlink signal sets may be replaced with different types of second downlink signals; or may be replaced with different second downlink signal sets, where different second downlink signal sets may correspond to different types. Optionally, the second downlink signals in one type of second downlink signal set may belong to the same type.

Optionally, different types of second downlink signal sets may correspond to different signal patterns. Optionally, different types of second downlink signal sets may correspond to different transmission power settings. Optionally, different types of second downlink signal sets may correspond to different applicable cell types. Optionally, different types of second downlink signal sets may correspond to different applicable scenarios. Optionally, different types of second downlink signal sets may correspond to different moving speeds of the terminal device. Optionally, different types of second downlink signal sets may correspond to different transmission configurations. Optionally, different types of second downlink signal sets may correspond to different antenna configurations. Optionally, different types of second downlink signal sets may correspond to different channel information. Optionally, different types of second downlink signal sets may correspond to different signal patterns and different transmission power settings.

In some embodiments, the second set may be used to indicate one or more types of second processing models, and/or the second set may include one or more identifiers of the one or more types of second processing models.

In some embodiments, for the second reference signals associated with different types of second processing models, at least one of the following may be different: a signal pattern, a transmission power setting, an applicable cell type, an applicable scenario, a moving speed of the terminal device, a transmission configuration, an antenna configuration, channel information, or a format sequence.

Optionally, the second reference signals associated with different types of second processing models may correspond to different signal patterns. Optionally, the second reference signals associated with different types of second processing models may correspond to different transmission power settings. Optionally, the second reference signals associated with different types of second processing models may correspond to different applicable cell types. Optionally, the second reference signals associated with different types of second processing models may correspond to different applicable scenarios. Optionally, the second reference signals associated with different types of second processing models may correspond to different moving speeds of the terminal device. Optionally, the second reference signals associated with different types of second processing models may correspond to different transmission configurations. Optionally, the second reference signals associated with different types of second processing models may correspond to different antenna configurations. Optionally, the second reference signals associated with different types of second processing models may correspond to different channel information. Optionally, the second reference signals associated with different types of second processing models may correspond to different signal patterns and different transmission power settings.

Optionally, the above descriptions of the second set may be combined with each other, which is not limited in the embodiments of the present disclosure. For example, the second set may be used to indicate the one or more types of second uplink signal sets, and also used to indicate the one or more types of second downlink signal sets; and/or, the second set may include the one or more identifiers of the one or more types of second uplink signal sets, and also include the one or more identifiers of the one or more types of second downlink signal sets. For another example, the second set may include at least one of the following: the one or more identifiers of one or more second uplink signals; the one or more identifiers of one or more second downlink signals; or the one or more identifiers of one or more types of second processing models. For yet another example, the second set may include at least one of the following: the one or more identifiers of the one or more types of second uplink signal sets; the one or more identifiers of the one or more types of second downlink signal sets; or the one or more identifiers of the one or more types of second processing models.

The following provides descriptions of different signal patterns.

In any embodiment of the present disclosure, a difference in signal patterns may include at least one of the following:
the reference signal that is non-orthogonally transmitted with the data signal existing on different time-domain resources; or
the reference signal that is non-orthogonally transmitted with the data signal existing on different frequency-domain resources.

Optionally, the difference in signal patterns may include that: the reference signal that is non-orthogonally transmitted with the data signal may exist on different time-domain resources. Optionally, the difference in signal patterns may include that: the reference signal that is non-orthogonally transmitted with the data signal may exist on different frequency-domain resources. Optionally, the difference in signal patterns may include that: the reference signal that is non-orthogonally transmitted with the data signal may exist on different time-domain resources, and the reference signal that is non-orthogonally transmitted with the data signal may also exist on different frequency-domain resources.

Optionally, the reference signal that is non-orthogonally transmitted with the data signal may include any reference signal that is non-orthogonally transmitted with the data signal.

Optionally, different time-domain resources may include one of the following: different frame resources, different subframe resources, different slot resources, or different symbol resources, etc. For example, different symbol resources in the same slot are different time-domain resources. For another example, resources in different slots are different resources. For yet another example, resources in different symbols within different slots are different time-domain resources. For still yet another example, different slot resources in the same frame are different time-domain resources. For still yet another example, resources in different frames are different resources. For still yet another example, resources in different slots of different frames are different time-domain resources.

Optionally, different frequency-domain resources may include at least one of the following: resources in different frequency ranges, or resources at different positions within a same frequency range.

The following provides descriptions of different transmission power settings.

In any embodiment of the present disclosure, transmission power settings corresponding to any two of the following may be different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

For example, one transmission power setting may include that: the transmission power of the reference signal that is non-orthogonally transmitted with the data signal may be the first power. Furthermore, another transmission power setting may include that: the ratio of the transmission power of the reference signal that is non-orthogonally transmitted with the data signal to the transmission power of the data signal may be the first ratio. Therefore, such two transmission power settings are different. For another example, one transmission power setting may include that: the transmission power of the reference signal that is non-orthogonally transmitted with the data signal may be the first power. Furthermore, another transmission power setting may include that: the transmission power to be used may be determined based on the position of the reference signal that is non-orthogonally transmitted with the data signal. Therefore, such two transmission power settings are different. For yet another example, one transmission power setting may include that: the transmission power to be used may be determined based on the position of the reference signal that is non-orthogonally transmitted with the data signal. Furthermore, another transmission power setting may include that: the transmission power to be used may be determined based on the signal sequence corresponding to the reference signal that is non-orthogonally transmitted with the data signal. Therefore, such two transmission power settings are different.

Optionally, the signal sequence may include at least one of the following format sequences: a gold sequence, a Zadoff-Chu (ZC) sequence, an m-sequence, an all-one sequence, a quadrature phase shift keying (QPSK) sequence, a 16 quadrature amplitude modulation (QAM) sequence, a 64 QAM sequence, or an orthogonal frequency division multiplexing (OFDM) sequence, etc.

In any embodiment of the present disclosure, the format sequence may include at least one of the following: a gold sequence, a ZC sequence, an m-sequence, an all-one sequence, a QPSK sequence, a 16 QAM sequence, a 64 QAM sequence, or an OFDM sequence, etc.

In any embodiment of the present disclosure, the reference signal (such as: the first reference signal, the second reference signal, the third reference signal, the fourth reference signal, the fifth reference signal, the sixth reference signal) may include at least one of the following: a channel state information reference signal (CSI-RS), a demodulation reference signal (DMRS), a phase tracking reference signal (PT-RS), a sounding reference signal (SRS), a synchronization signal block (SSB), or a positioning reference signal (PRS).

Optionally, the reference signal may include the CSI-RS. Optionally, the reference signal may include the DMRS. Optionally, the reference signal may include the PT-RS. Optionally, the reference signal may include the SRS. Optionally, the reference signal may include the SSB. Optionally, the reference signal may include the PRS.

The following describes the communication method of the present disclosure with the terminal device including a UE and the network device including a base station.

According to the method provided in the embodiments of the present disclosure, between the UE and the base station, it may be determined: whether the first reference signal (the reference signal that is non-orthogonally transmitted with the data signal) is supported, which first reference signals are supported, how to determine the available first reference signal set, and how to determine the first reference signal to be used.

In the first reference signal transmission scheme in the embodiments of the present disclosure, the data (corresponding to the aforementioned data signal) and the first reference signal may be transmitted on the same transmission resource, e.g., the data and the reference signal are simultaneously transmitted on the same time-domain and frequency-domain resource. For example, the signal of at least one of the following may be transmitted with the transmitted data (in superimposed transmission) on the same transmission resource: a CSI-RS, a DMRS, a PT-RS, an SRS, an SSB, or a PRS, etc. The superimposed transmission manner imposes requirements on the processing scheme, for example, it is required to adopt a first processing scheme that matches the aforementioned transmission manner and transmission configuration. For such transmission mechanism where the data and the first reference signal are transmitted in the superimposed transmission on the same transmission resource, the first processing scheme may parse, from the superimposed data and first reference signal, at least one of the following: the first reference signal, channel information (e.g., at least one of a time-domain channel, a frequency-domain channel, a channel characteristic corresponding to an antenna, or a channel characteristic corresponding to an angle, etc.), or the data signal, etc. The first processing scheme may be implemented based on an AI/ML model. For example, the implementation of the model may be constructed based on one or a combination of the following network architectures: a fully connected network (FCN), a convolutional neural network (CNN), a recurrent neural network (RNN), or a transformer neural network.

Optionally, a difference between different first reference signals may be caused by the combined influence of one or more of the following influence factors.

Exemplarily, the characteristics of different first reference signals may originate from different first reference signal patterns. For example, in the time domain (over a specific time-domain length), e.g., in all symbols within one or more slots, or in specific one or more symbols within one or more slots, there may be the superimposed transmission of the first reference signal and the data. For another example, in the frequency domain (over a specific frequency-domain range), e.g., in all subcarriers within one or more resource blocks, or in specific one or more subcarriers within one or more resource blocks, there may be the superimposed transmission of the first reference signal and the data.

Exemplarily, different power settings for the first reference signal may be adopted. For example, at all first reference signal positions, the same power may be used to transmit the first reference signal(s). For another example, a fixed transmission power may be used for the first reference signal(s). For yet another example, a fixed ratio between the transmission power for the first reference signal(s) and the power for the data may be used. For yet another example, at different reference signal positions, different powers may be used to transmit the first reference signals. For still another example, the power training results for the first reference signal(s) derived from different AI/ML may be used.

Exemplarily, different sequences of the first reference signal may be adopted. For example, the gold sequence, the ZC sequence, the m-sequence, the all-one sequence, the specific modulated sequence such as QPSK, the 16QAM, the 64QAM, etc., may be used. Additionally, the AI/ML sequence training result for the first reference signal(s) may be used.

Exemplarily, different first reference signals may be applied to different cells (such as macro cell, ordinary cell, small cell), different scenarios (such as indoor, outdoor), different moving speeds of the UE (such as low speed, medium speed, high speed, ultra-high speed, etc.), different transmission configurations (such as the number of frequency-domain resources, bandwidth, subband, the number of time-domain resources, slot, subframe), different antenna configurations (such as transmitting antenna port configuration, receiving antenna port configuration), different channel characteristics (such as LOS channel, NLOS channel, multipath characteristic, frequency selectivity characteristic), etc.

Table 1 shows different pilot signals (i.e., the first reference signals).

**Table 1**

| First pilot identifier | Time-domain configuration for superimposed pilot | Frequency-domain configuration for superimposed pilot | Configuration power for superimposed pilot |
|---|---|---|---|
| 1 | All time-domain symbols | All frequency-domain subcarriers | First pilot power scheme, e.g., pilot power ratio of 25% |
| 2 | First time-domain pattern, e.g., one symbol with the superimposed pilot and data being transmitted every f symbols, where f=1, 2 | First frequency-domain pattern, e.g., one symbol with the superimposed pilot and data being transmitted every d subcarriers, where d=1, 2 | First pilot power scheme, e.g., pilot power ratio of 25% |
| 3 | Second time-domain pattern | Second frequency-domain pattern | Second pilot power scheme |
| 4 | Third time-domain pattern | Third frequency-domain pattern | Third pilot power scheme |
| 5 | More time-domain patterns | More frequency-domain patterns | More pilot power schemes |
| More identifier | More time-domain patterns | More frequency-domain patterns | More pilot power schemes |

Table 2 shows the application scenarios of different first reference signals.

**Table 2**

| First pilot type identifier | Description |
|---|---|
| 1 | Used in high-speed scenario |
| 2 | Used in medium-speed scenario |
| 3 | Used in low-speed scenario |
| 4 | Used in macro cell |
| 5 | Used in small cell |
| More type identifier | More classification for usage scenarios, configurations, or conditions |

In Tables 1 and 2, the first pilot identifier may include a first reference signal identifier, and the superimposed pilot may include the first reference signal.

It should be noted that, although Tables 1 and 2 list five and more first pilot identifiers, the embodiments of the present disclosure are not limited thereto. Tables 1 and 2 may include other numbers of identifiers, such as one identifier, two identifiers, three identifiers, four identifiers, or five identifiers. For example, Tables 1 and 2 may only include the first pilot type identifier 1 or 2. For another example, Tables 1 and 2 may only include the first pilot type identifiers 1 and 2. For yet another example, Tables 1 and 2 may only include the first pilot type identifiers 1, 2 and 3. For still yet another example, Tables 1 and 2 may only include the first pilot type identifiers 1, 2, 3 and 4. No limits are made in the embodiments of the present disclosure.

Different UEs may have different capabilities and configurations for transmitting the first reference signal(s) and processing the first reference signal(s). Different base stations may also have different capabilities and configurations for processing the first reference signal(s) and transmitting the first reference signal(s).

The following describes, in six different situations, how to handle the foregoing differences in the transmission and processing capabilities for the first reference signal(s) between different UEs and base stations, and finally to determine the available first reference signal(s).

### Embodiment 1

The UE indicates a first reference signal set supported by the UE (which is, for example, supported to be transmitted and/or processed by the UE, i.e., the aforementioned first set). Additionally, the base station indicates a first reference signal (e.g., an uplink reference signal, or a downlink reference signal) to be used in the first reference signal set that is supported by the UE. Herein, the first reference signal that is indicated to be used may correspond to the aforementioned fifth reference signal.

FIG. 7 is a schematic flowchart of yet another communication method according to an embodiment of the present disclosure. As shown in FIG. 7, the method includes the following operations S701 and S702.

At block S701, a UE sends a first reference signal set (first set) supported by the UE to a base station.

At block S702, the base station indicates a first reference signal (fifth reference signal) to be used to the UE.

Optionally, the base station may indicate the first reference signal to be used in the first reference signal set that is supported by the UE.

Optionally, for the uplink reference signal, the UE may indicate a supported first uplink reference signal set; and the base station may indicate a specific first uplink reference signal (fifth reference signal) to be used in the first uplink reference signal set to the UE.

Optionally, the UE may indicate the supported first uplink reference signal set through one or more of the following manners: (1) an RRC message; (2) an UCI message; (3) a uplink message during a random access procedure, such as MsgA, Msg3; (4) a PUCCH; (5) a PUSCH; (6) an AI/ML dedicated uplink channel; (7) UE capability reporting.

Optionally, when the UE indicates the supported first uplink reference signal set through one or more of the aforementioned manners, the used indication scheme may be at least one of the following.
(1) The supported first uplink reference signal set may be directly indicated; for example, one or more supported first uplink reference signals may be indicated, e.g., through identifier(s) of the first uplink reference signal(s).
(2) One or more types of first uplink reference signal sets may be indicated, where each type of first uplink reference signal includes one or more first uplink reference signals. Different types represent first uplink reference signals with first contents; or, different types represent different pattern subsets and power characteristic subsets of first uplink reference signals. For example, it may be indicated through the type identifier(s) of the first uplink reference signal(s).

Optionally, in any embodiment of the present disclosure, the first content may include at least one of the following: applicability to different cells (such as macro cell, ordinary cell, small cell), different scenarios (such as indoor, outdoor), different moving speeds of the UE (such as low speed, medium speed, high speed, ultra-high speed, etc.), different transmission configurations (such as the number of frequency-domain resources, bandwidth, subband, the number of time-domain resources, slot, subframe), different antenna configurations (such as transmitting antenna port configuration, receiving antenna port configuration), or different channel characteristics (such as LOS channel, NLOS channel, multipath characteristic, frequency selectivity characteristic), etc.

Optionally, for the downlink reference signal, the UE may indicate a supported first downlink reference signal set; and the base station may indicate a specific first downlink reference signal to be used in the first downlink reference signal set to the UE.

The UE may indicate the supported first downlink reference signal set through one or more of the following manners: (1) an RRC message; (2) an UCI message; (3) a uplink message during a random access procedure, such as MsgA, Msg3; (4) a PUCCH; (5) a PUSCH; (6) an AI/ML dedicated uplink channel; (7) UE capability reporting.

When the UE indicates the supported first downlink reference signal set through one or more of the aforementioned manners, the used indication scheme(s) may be the following.
(1) The supported first downlink reference signal set may be directly indicated; for example, one or more supported first downlink reference signals may be indicated, e.g., through identifier(s) of the first downlink reference signal(s).
(2) The supported processing model or processing function for first downlink reference signal(s) may be directly indicated; for example, one or more supported processing models or processing functions for the first downlink reference signal(s) may be indicated, e.g., through identifier(s) of the processing model(s) or processing function(s) for the first downlink reference signal(s).
(3) One or more types of first downlink reference signal sets may be indicated, where each type of first downlink reference signal includes one or more first downlink reference signals. Different types represent first downlink reference signals with first contents; or, different types represent different pattern subsets and power characteristic subsets of first downlink reference signals. For example, it may be indicated through the type identifier(s) of the first downlink reference signal(s).
(4) One or more types of processing models or processing functions for first downlink reference signal(s) may be indicated, where each type of processing model or processing function for the first downlink reference signal(s) includes one or more processing models or processing functions for the first downlink reference signal(s), which may process multiple first downlink reference signals. Different types represent the processing models and processing functions for the first downlink reference signal(s); or, different types represent processing the models or processing functions for different pattern subsets and power characteristic subsets of the first downlink reference signals. For example, it may be indicated through the type identifier(s) of the processing model(s) or processing function(s) for the first downlink reference signal(s).

Optionally, the method in the embodiment 1 may further include that: the base station indicates the UE to report the first reference signal set supported by the UE, which enables the UE to indicate the supported first reference signal set. Optionally, the manner in which the base station indicates the UE to report the first reference signal set supported by the UE may include one or more of the following: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel.

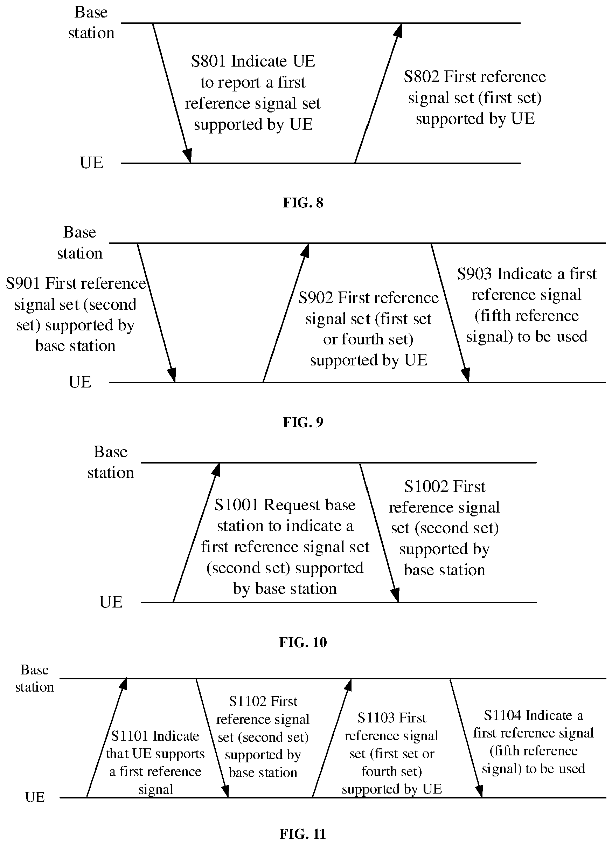

FIG. 8 is a schematic flowchart of still yet another communication method according to an embodiment of the present disclosure. As shown in FIG. 8, the method includes the following operations S801 and S802.

At block S801, a base station indicates a UE to report a first reference signal set supported by the UE.

The S801 may correspond to the process of the terminal device receiving the third indication information from the network device described above, where the third indication information indicates to report the first set.

At block S802, the UE sends the first reference signal set (first set) supported by the UE to the base station.

### Embodiment 2

The base station may indicate the first reference signal set supported by the base station (which is, for example, supported to be received, processed and transmitted by the base station, i.e., the aforementioned second set). The UE may indicate the first reference signal set supported by the UE (which is, for example, supported to be transmitted and/or processed by the UE, i.e., the aforementioned first set or fourth set). Additionally, the base station may indicate the first reference signal (e.g., a first uplink reference signal, or a first downlink reference signal) to be used in the first reference signal set (i.e., the first set or the fourth set) supported by the UE. Herein, the first reference signal that is indicated to be used may correspond to the aforementioned fifth reference signal. Herein, the fourth set may be a subset of the second set.

FIG. 9 is a schematic flowchart of a communication method according to another embodiment of the present disclosure. As shown in FIG. 9, the method includes the following operations S901 to S903.

At block S901, a base station indicates a first reference signal set (second set) supported by the base station.

At block S902, a UE indicates a first reference signal set (first set or fourth set) supported by the UE.

At block S903, the base station indicates a first reference signal (fifth reference signal) to be used in the first reference signal set (i.e., the first set or the fourth set) supported by the UE.

Two differences between the embodiment 2 and embodiment 1 are described below.
(1) There may be the process of one base station indicating the supported first reference signal set.
(2) The supported first reference signal set indicated by the UE may be a subset of the first reference signal set indicated by the base station.

Optionally, regarding the base station indicating the first reference signal set supported by the base station, the purpose of the above process in the embodiment is that: the base station notifies the first reference signal set supported by the base station side (indicating, directly or indirectly, the first reference signal set supported by the base station; or indicating, directly or indirectly, the first reference signal set that can be processed by the base station; or indicating, directly or indirectly, the model or function that can process the first reference signal). The UE may report the first reference signal set supported by the UE, and optionally, the set reported by the UE may be the subset of the first reference signal set that is indicated to be supported by the base station. Based on the above operations, the base station can know the first reference signal to be used, and the UE can also know the first reference signal to be used.

The scheme for the base station indicating the supported first reference signal set may be as follows.

For example, for the uplink reference signal, the base station may indicate the supported first uplink reference signal set. The base station may indicate the supported first uplink reference signal set through one or more of the following manners: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel; (9) capability indication of the network side.

Optionally, when the base station indicates the supported first uplink reference signal set through one or more of the aforementioned manners, the used indication scheme may be at least one of the following.
(1) The supported first uplink reference signal set may be directly indicated; for example, one or more supported first uplink reference signals may be indicated, e.g., through identifier(s) of the first uplink reference signal(s).
(2) The supported processing model or processing function for first uplink reference signal(s) may be directly indicated; for example, one or more supported processing models or processing functions for the first uplink reference signal(s) may be indicated, e.g., through identifier(s) of the processing model(s) or processing function(s) for the first uplink reference signal(s).
(3) One or more types of first uplink reference signal sets may be indicated, where each type of first uplink reference signal includes multiple first uplink reference signals. Different types represent first uplink reference signals with first contents; or, different types represent different pattern subsets and power characteristic subsets of first uplink reference signals. For example, it may be indicated through the type identifier(s) of the first uplink reference signal(s).
(4) One or more types of processing models or processing functions for first uplink reference signal(s) may be indicated, where each type of processing model or processing function for the first uplink reference signal(s) includes multiple processing models or processing functions for the first uplink reference signal(s), which may process multiple first uplink reference signals. Different types represent the processing models and processing functions for the first uplink reference signal(s) with first contents; or, different types represent the processing models or processing functions for different pattern subsets and power characteristic subsets of the first uplink reference signals. For example, it may be indicated through the type identifier(s) of the processing model(s) or processing function(s) for the first uplink reference signal(s).

Optionally, when the base station indicates the supported first downlink reference signal set through one or more of the aforementioned manners, the used indication scheme may be at least one of the following.
(1) The supported first downlink reference signal set may be directly indicated; for example, one or more supported first downlink reference signals may be indicated, e.g., through identifier(s) of the first downlink reference signal(s).
(2) One or more types of first downlink reference signal sets may be indicated, where each type of first downlink reference signal includes multiple first downlink reference signals. Different types represent first downlink reference signals with first contents; or, different types represent different pattern subsets and power characteristic subsets of first downlink reference signals. For example, it may be indicated through the type identifiers of the first downlink reference signals.

Optionally, the method in the embodiment 2 may further include that: the UE requests the base station to indicate the first reference signal set supported by the base station, which enables the base station to indicate the supported first reference signal set. Optionally, the manner in which the UE requests the base station to indicate the first reference signal set supported by the base station may include one or more of the following: (1) an RRC message; (2) an UCI message; (3) an uplink message during a random access procedure, such as MsgA, Msg3; (4) a PUCCH; (5) a PUSCH; (6) an AI/ML dedicated uplink channel.

FIG. 10 is a schematic flowchart of a communication method according to yet another embodiment of the present disclosure. As shown in FIG. 10, the method includes the following operations S1001 and S1002.

At block S1001, a UE requests a base station to indicate a first reference signal set (second set) supported by the base station.

Herein, the S1001 may correspond to the process of the terminal device sending the fourth indication information to the network device described above, where the fourth indication information indicates the network device to send the second set.

At block S1002, the base station indicates the first reference signal set (second set) supported by the base station.

### Embodiment 3

FIG. 11 is a schematic flowchart of a communication method according to still yet another embodiment of the present disclosure. As shown in FIG. 11, the method includes the following operations S1101 to S1104.

At block S1101, a UE indicates that the UE supports a first reference signal.

The S1101 may correspond to the process of the terminal device sending the first capability information to the network device in the above embodiments, where the first capability information indicates that the terminal device supports to non-orthogonally transmit the signal and/or supports to process the signal that is non-orthogonal transmitted.

At block S1102, a base station indicates a first reference signal set (second set) supported by the base station.

At block S1103, the UE indicates a first reference signal set (first set or fourth set) supported by the UE.

At block S1104, the base station indicates a first reference signal (fifth reference signal) to be used in the first reference signal set (i.e., the first set or the fourth set) supported by the UE.

The main difference between the embodiment 3 and embodiment 2 may be the process of one UE indicating to support the first reference signal.

Optionally, for the uplink reference signal or downlink signal, the UE may indicate to support the first reference signal (to the base station) through one or more of the following manners: (1) an RRC message; (2) an UCI message; (3) a uplink message during a random access procedure, such as MsgA, Msg3; (4) a PUCCH; (5) a PUSCH; (6) an AI/ML dedicated uplink channel; (7) UE capability reporting. Here, the supporting the first reference signal may be, for example: supporting the first uplink reference signal; supporting the first downlink reference signal; supporting to receive and process the first downlink reference signal.

### Embodiment 4

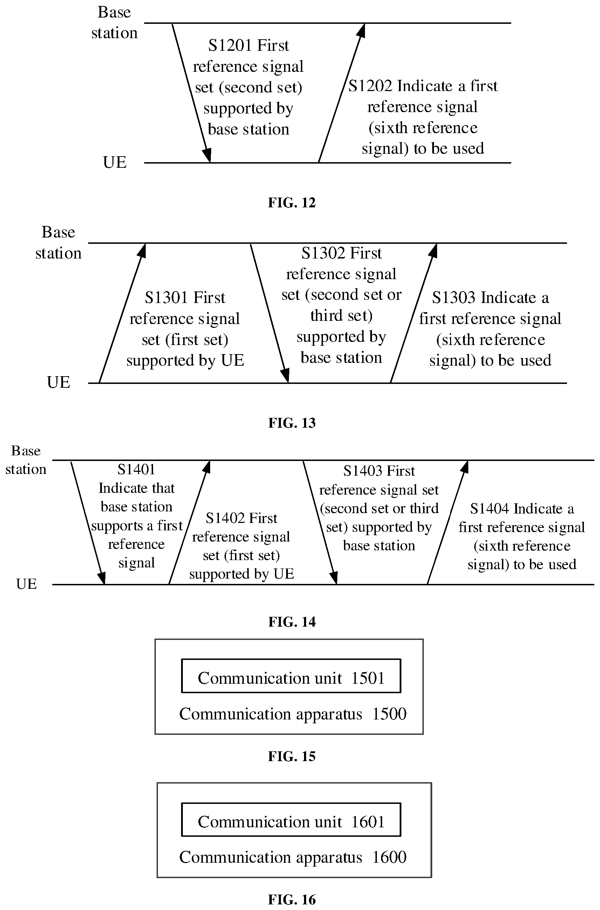

FIG. 12 is a schematic flowchart of a communication method according to still yet another embodiment of the present disclosure. As shown in FIG. 12, the method includes the following operations S1201 and S1202.

At block S1201, a base station indicates a first reference signal set (second set) supported by the base station.

At block S1202, a UE indicates a first reference signal (i.e., the sixth reference signal) to be used in the first reference signal set supported by the base station.

Optionally, the first reference signal that is indicated to be used may include at least one of the following: an uplink reference signal or a downlink reference signal.

Optionally, for the uplink reference signal, the base station may indicate the supported first uplink reference signal set; and the UE may indicate the specific first uplink reference signal to be used in the first uplink reference signal set to the base station.

Optionally, the base station may indicate the supported first uplink reference signal set through one or more of the following manners: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel; (9) capability indication of the network side.

Optionally, when the base station indicates the supported first uplink reference signal set through one or more of the aforementioned manners, the used indication scheme may be at least one of the following.
(1) The supported first uplink reference signal set may be directly indicated; for example, one or more supported first uplink reference signals may be indicated, e.g., through identifier(s) of the first uplink reference signal(s).
(2) The supported processing model or processing function for first uplink reference signal(s) may be directly indicated; for example, one or more supported processing models or processing functions for the first uplink reference signal(s) may be indicated, e.g., through identifier(s) of the processing model(s) or processing function(s) for the first uplink reference signal(s).
(3) One or more types of first uplink reference signal sets may be indicated, where each type of first uplink reference signal includes multiple first uplink reference signals. Different types represent first uplink reference signals with first contents; or, different types represent different pattern subsets and power characteristic subsets of first uplink reference signals. For example, it may be indicated through the type identifier(s) of the first uplink reference signal(s).
(4) One or more types of processing models or processing functions for first uplink reference signal(s) may be indicated, where each type of processing model or processing function for the first uplink reference signal(s) includes multiple processing models or processing functions for the first uplink reference signal(s), which may process multiple first uplink reference signals. Different types represent the processing models and processing functions for the first uplink reference signal(s) with first contents; or, different types represent the processing models or processing functions for different pattern subsets and power characteristic subsets of the first uplink reference signals. For example, it may be indicated through the type identifier(s) of the processing model(s) or processing function(s) for the first uplink reference signal(s).

Optionally, for the downlink reference signal, the base station may indicate the supported first downlink reference signal set; and the UE may indicate the specific first downlink reference signal to be used in the first downlink reference signal set to the base station.

The base station may indicate the supported first downlink reference signal set through one or more of the following manners: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel; (9) capability indication of the network side.

When the base station indicates the supported first downlink reference signal set through one or more of the aforementioned manners, the used indication scheme may be at least one of the following.
(1) The supported first downlink reference signal set may be directly indicated; for example, one or more supported first downlink reference signals may be indicated, e.g., through identifier(s) of the first downlink reference signal(s).
(2) One or more types of first downlink reference signal sets may be indicated, where each type of first downlink reference signal includes multiple first downlink reference signals. Different types represent first downlink reference signals with first contents; or, different types represent different pattern subsets and power characteristic subsets of first downlink reference signals. For example, it may be indicated through the type representation(s) of the first downlink reference signal(s).

Optionally, the embodiment 4 may further include that: the UE requests the base station to indicate the first reference signal set supported by the base station; and the base station indicates the supported first reference signal set. The manner in which the UE requests the base station to indicate the first reference signal set supported by the base station may include one or more of the following: (1) an RRC message; (2) an UCI message; (3) an uplink message during a random access procedure, such as MsgA, Msg3; (4) a PUCCH; (5) a PUSCH; (6) an AI/ML dedicated uplink channel.

### Embodiment 5

FIG. 13 is a schematic flowchart of yet another communication method according to another embodiment of the present disclosure. As shown in FIG. 13, the method includes the following operations S1301 to S1303.

At block S1301, a UE indicates a first reference signal set (first set) supported by the UE.

At block S1302, a base station indicates a first reference signal set (second set or third set) supported by the base station.

At block S1303, the UE indicates a first reference signal (sixth reference signal) to be used in the first reference signal set supported by the base station.

Two differences between the embodiment 5 and embodiment 4 are described below.
(1) There may be the process of one UE indicating the supported first reference signal set.
(2) The supported first reference signal set indicated by the base station may be a subset of the first reference signal set indicated by the UE.

Optionally, regarding the UE indicating the first reference signal set supported by the UE, the purpose of the above process in the embodiment is that: the UE notifies the base station of the supported first reference signal set (indicating, directly or indirectly, the first reference signal set supported by the UE; or indicating, directly or indirectly, the first reference signal set that can be processed by the UE; or indicating, directly or indirectly, the model or function that can process the first reference signal). The base station may send the first reference signal set supported by the base station, and the set sent by the base station may be the subset of the first reference signal set that is indicated to be supported by the UE. Based on the above operations, the UE can know the first reference signal to be used, and the base station can also know the first reference signal to be used.

The scheme for the UE indicating the supported first reference signal set may be as follows.

For example, for the uplink reference signal, the UE may indicate the supported first uplink reference signal set. The UE may indicate the supported first uplink reference signal set through one or more of the following manners: (1) an RRC message; (2) an UCI message; (3) an uplink message during a random access procedure, such as MsgA, Msg3; (4) a PUCCH; (5) a PUSCH; (6) an AI/ML dedicated uplink channel; (7) UE capability reporting.

When the base station indicates the supported first uplink reference signal set through one or more of the aforementioned manners, the used indication scheme may be at least one of the following.
(1) The supported first downlink reference signal set may be directly indicated; for example, one or more supported first downlink reference signals may be indicated, e.g., through identifier(s) of the first downlink reference signal(s).
(2) The supported processing model or processing function for first downlink reference signal(s) may be directly indicated; for example, one or more supported processing models or processing functions for the first downlink reference signal(s) may be indicated, e.g., through identifier(s) of the processing model(s) or processing function(s) for the first downlink reference signal(s).
(3) One or more types of first downlink reference signal sets may be indicated, where each type of first downlink reference signal includes multiple first downlink reference signals. Different types represent first downlink reference signals with first contents; or, different types represent different pattern subsets and power characteristic subsets of first downlink reference signals. For example, it may be indicated through the type identifier(s) of the first downlink reference signal(s).
(4) One or more types of processing models or processing functions for first downlink reference signal(s) may be indicated, where each type of processing model or processing function for the first downlink reference signal(s) includes multiple processing models or processing functions for the first downlink reference signal(s), which may process multiple first downlink reference signals. Different types represent the processing models and processing functions for the first downlink reference signal(s) with first contents; or, different types represent the processing models or processing functions for different pattern subsets and power characteristic subsets of the first downlink reference signals. For example, it may be indicated through the type identifier(s) of the processing model(s) or processing function(s) for the first downlink reference signal(s).

Optionally, the embodiment 5 may further include that: the base station indicates the UE to report the first reference signal set supported by the UE; and the UE indicates the supported first reference signal set. Optionally, the manner in which the base station indicates the UE to report the first reference signal set supported by the UE may include one or more of the following: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel.

### Embodiment 6

FIG. 14 is a schematic flowchart of yet another communication method according to another embodiment of the present disclosure. As shown in FIG. 14, the method includes the following operations S1401 to S1404.

At block S1401, a base station indicates that a first reference signal is supported by the base station.

The S1401 may correspond to the process of the terminal device receiving the second capability information from the network device described above, where the second capability information indicates that the network device supports to non-orthogonally transmit the signal and/or supports to process the signal that is non-orthogonal transmitted.

At block S1402, a UE indicates a first reference signal set (first set) supported by the UE.

At block S1403, the base station indicates a first reference signal set (second set or third set) supported by the base station.

At block S1404, the UE indicates a first reference signal (sixth reference signal) to be used in the first reference signal set supported by the base station.

The main difference between the embodiment 6 and embodiment 5 may be the process of one base station indicating to support the first reference signal.

For example, for the uplink reference signal or downlink signal, the base station may indicate that the base station supports the first reference signal through one or more of the following manners: (1) a broadcast message, such as at least one of MIB, SIB1, or SIBx, etc.; (2) an RRC message; (3) an MAC CE; (4) a DCI message; (5) a downlink message during a random access procedure, such as MsgB, Msg2, Msg4; (6) a PDCCH; (7) a PDSCH; (8) an AI/ML dedicated downlink channel; (9) capability indication of the network side. Here, the supporting the first reference signal may be, for example: supporting the first uplink reference signal; supporting the first downlink reference signal; supporting to receive and process the first uplink reference signal.

The present disclosure provides the method for transmitting the reference signal and the data in the superimposed transmission, as well as determining the superimposed pilot that is supported by both of the UE and the base station. Due to the strong correlation between the transmission scheme of the superimposed reference signal (first reference signal) and the processing scheme of the superimposed reference signal, the specific superimposed reference signal can be used in the system only when both of the UE and the base station can support to transmit, receive and process the specific superimposed reference signal. Furthermore, considering that different UEs may support different superimposed reference signals, the superimposed reference signals that can be received and processed by the UEs may also be different. Similarly, considering that different base stations may support different superimposed reference signals, the superimposed reference signals that can be received and processed by the base stations may also have different characteristics. In the present disclosure, the superimposed reference signal (set) to be used and the superimposed reference signal processing scheme (set) between the UE and the base station may be determined through the capability interaction and information interaction, so as to ensure that the superimposed reference signal can be transmitted, received and processed on both sides of the UE and the base station.

The present disclosure provides the method for transmitting the reference signal and the data in the superimposed transmission, as well as determining the superimposed pilot that is supported by both of the UE and the base station. The present disclosure provides the corresponding embodiments for six different scenarios, with the differences in that: the UE indicates its supporting capability for the first reference signal; the base station indicates its supporting capability for the first reference signal; the UE indicates the supported first reference signal set; the base station indicates the supported first reference signal set; the UE indicates the first reference signal to be used; and the base station indicates the first reference signal to be used. The foregoing operations have different nested relationships under different assumptions and form different interaction processes as specifically described in the embodiments. In addition, the present disclosure includes the design of the first uplink reference signal (the uplink superimposed pilot) and the first downlink reference signal (the downlink superimposed pilot).

The preferred implementations of the present disclosure are described in detail above with reference to the accompanying drawings. However, the present disclosure is not limited to the specific details in the aforementioned implementations. Within the scope of the technical conception of the present disclosure, a variety of simple modifications may be made to the technical solutions of the present disclosure, and such simple modifications shall fall within the scope of protection of the present disclosure. For example, various specific technical features described in the above specific implementations may be combined in any appropriate way without contradiction. In order to avoid unnecessary repetition, the present disclosure does not further elaborate on various possible combinations. For another example, any combination may be made between various implementations of the present disclosure, as long as the combinations do not contradict the idea of the present disclosure, and the combinations shall also be regarded as the contents of the present disclosure. For yet another example, under the premise of no conflict, various embodiments and/or technical features in the various embodiments described in the present disclosure may be combined with the related art in any manner. The technical solutions acquired after such combinations shall also fall within the scope of protection of the present disclosure.

It should be further understood that, in the various method embodiments of the present disclosure, the size of sequence number of the aforementioned processes does not imply the order of execution. The order of execution of each of the processes should be determined based on functions and inherent logic thereof, and shall not constitute any limitation on the implementation processes in the embodiments of the present disclosure. Furthermore, in the embodiments of the present disclosure, terms "downlink", "uplink" and "sidelink" are used to indicate a transmission direction of a signal or data. Herein, the term "downlink" is used to indicate that the transmission direction of the signal or data is a first direction transmitted from a station to a user device in a cell. The term "uplink" is used to indicate that the transmission direction of the signal or data is a second direction transmitted from the user device in the cell to the station. Moreover, the term "sidelink" is used to indicate that the transmission direction of the signal or data is a third direction transmitted from a user device 1 to a user device 2. For example, a "downlink signal" indicates that the transmission direction of the signal is the first direction. Furthermore, in the embodiments of the present disclosure, a term "and/or" is only used to indicate an association relationship for describing associated objects, and indicates that three kinds of relationships may exist. Specifically, "A and/or B" may indicate three cases, i.e., independent existence of A, existence of both A and B, and independent existence of B. Moreover, a character "/" in the present disclosure generally indicates that preceding and following associated objects form an "or" relationship.

FIG. 15 is a schematic diagram of a structural composition of a communication apparatus according to an embodiment of the present disclosure, which is applied to a terminal device. As shown in FIG. 15, in the embodiments corresponding to FIG. 15, the communication apparatus 1500 includes a communication unit 1501.

The communication unit 1501 is configured to send a first set and/or receive a second set.

Herein, the first set is used to indicate at least one of the following: one or more first reference signals supported by the terminal device; or one or more first processing models supported by the terminal device. The first reference signal is non-orthogonally transmitted with a data signal; and the first processing model is used to process at least one of the following: the first reference signal and the data signal that are non-orthogonally transmitted; or the first reference signal.

Herein, the second set is used to indicate at least one of the following: one or more second reference signals supported by a network device; or one or more second processing models supported by the network device. The second reference signal is non-orthogonally transmitted with the data signal; and the second processing model is used to process at least one of the following: the second reference signal and the data signal that are non-orthogonally transmitted; or the second reference signal.

In some embodiments, the communication unit 1501 includes a sending unit and/or a receiving unit. The sending unit is configured to send the first set, and the receiving unit is configured to receive the second set. In the following embodiments, the sending unit is configured to send information, and the receiving unit is configured to receive information.

In some embodiments, the communication apparatus 1500 may further include a determination unit, and the determination unit may be configured to determine the first set.

In some embodiments, the communication unit 1501 may further be configured to receive a third set. The third set may be a subset of the first set. The third set may be used to indicate at least one of the following: one or more third reference signals supported by the network device; or one or more third processing models supported by the network device. The third reference signal may be non-orthogonally transmitted with the data signal. The third processing model may be used to process at least one of the following: the third reference signal and the data signal that are non-orthogonally transmitted; or the third reference signal.

In some embodiments, the communication unit 1501 may further be configured to send a fourth set. The fourth set may be a subset of the second set. The fourth set may be used to indicate at least one of the following: one or more fourth reference signals supported by the communication apparatus; or one or more fourth processing models supported by the communication apparatus. The fourth reference signal may be non-orthogonally transmitted with the data signal. The fourth processing model may be used to process at least one of the following: the fourth reference signal and the data signal that are non-orthogonally transmitted; or the fourth reference signal.

In some embodiments, the fourth set may be included or carried in at least one of the following: an RRC message, UCI, an uplink message during a random access procedure, a PUCCH, a PUSCH, an AI/ML dedicated uplink channel, or capability reporting information of the communication apparatus.

In some embodiments, the communication unit 1501 may further be configured to receive first indication information. The first indication information may indicate a fifth reference signal. The fifth reference signal may be included in at least one of the following: the one or more first reference signals, the one or more first reference signals associated with the one or more first processing models, the one or more fourth reference signals, or the one or more fourth reference signals associated with one or more fourth processing models.

In some embodiments, the communication unit 1501 may further be configured to send second indication information. The second indication information may indicate a sixth reference signal. The sixth reference signal may be included in at least one of the following: the one or more second reference signals, the one or more second reference signals associated with the one or more second processing models, the one or more third reference signals, or the one or more third reference signals associated with one or more third processing models.

In some embodiments, the communication unit 1501 may further be configured to receive third indication information; and the third indication information may indicate to report the first set.

In some embodiments, the third indication information may be included or carried in at least one of the following: a broadcast message, an RRC message, an MAC CE, DCI, a downlink message during a random access procedure, a PDCCH, a PDSCH, or an AI/ML dedicated downlink channel.

In some embodiments, the communication unit 1501 may further be configured to send fourth indication information; and the fourth indication information may indicate the network device to send the second set.

In some embodiments, the fourth indication information may be included or carried in at least one of the following: an RRC message, UCI, an uplink message during a random access procedure, a PUCCH, a PUSCH, or an AI/ML dedicated uplink channel.

In some embodiments, the communication unit 1501 may further be configured to send first capability information; and the first capability information may indicate that the terminal device supports to non-orthogonally transmit a signal and/or supports to process the signal that is non-orthogonally transmitted.

In some embodiments, the first capability information may be included or carried in at least one of the following: an RRC message, UCI, an uplink message during a random access procedure, a PUCCH, a PUSCH, an AI/ML dedicated uplink channel, or capability reporting information of the terminal device.

In some embodiments, the communication unit 1501 may further be configured to receive second capability information; and the second capability information may indicate that the network device supports to non-orthogonally transmit a signal and/or supports to process the signal that is non-orthogonally transmitted.

In some embodiments, the second capability information may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

In some embodiments, the first set may be included or carried in at least one of the following: an RRC message, UCI, an uplink message during a random access procedure, a PUCCH, a PUSCH, an AI/ML dedicated uplink channel, or capability reporting information of the terminal device.

In some embodiments, the one or more first reference signals may include one or more first uplink signals, and/or the one or more first reference signals may include one or more first downlink signals.

In some embodiments, the first set may include at least one of the following: one or more identifiers of one or more first uplink signals; one or more identifiers of one or more first downlink signals; or one or more identifiers of the one or more first processing models.

In some embodiments, the first set may be used to indicate one or more types of first uplink signal sets; and/or the first set may include one or more identifiers of the one or more types of first uplink signal sets. For different types of first uplink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the first set may be used to indicate one or more types of first downlink signal sets; and/or the first set may include one or more identifiers of the one or more types of first downlink signal sets. For different types of first downlink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the first set may be used to indicate one or more types of first processing models; and/or the first set may include one or more identifiers of the one or more types of first processing models. For the first reference signals associated with different types of first processing models, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the second set may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

In some embodiments, the one or more second reference signals may include one or more second uplink signals, and/or the one or more second reference signals may include one or more second downlink signals.

In some embodiments, the second set may include at least one of the following: one or more identifiers of one or more second uplink signals; one or more identifiers of one or more second downlink signals; or one or more identifiers of the one or more second processing models.

In some embodiments, the second set may be used to indicate one or more types of second uplink signal sets; and/or the second set may include one or more identifiers of the one or more types of second uplink signal sets. For different types of second uplink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the second set may be used to indicate one or more types of second downlink signal sets; and/or the second set may include one or more identifiers of the one or more types of second downlink signal sets. For different types of second downlink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the second set may be used to indicate one or more types of second processing models; and/or the second set may include one or more identifiers of the one or more types of second processing models. For second reference signals associated with different types of second processing models, at least one of the following may be different: a signal pattern, a transmission power setting, an applicable cell type, an applicable scenario, a moving speed of the terminal device, a transmission configuration, an antenna configuration, channel information, or a format sequence.

In some embodiments, a difference in signal patterns may include at least one of the following:
the reference signal that is non-orthogonally transmitted with the data signal existing on different time-domain resources; or
the reference signal that is non-orthogonally transmitted with the data signal existing on different frequency-domain resources.

In some embodiments, transmission power settings corresponding to any two of the following may be different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

In some embodiments, at least one of the first reference signal, the second reference signals, the third reference signals, the fourth reference signals, the fifth reference signal, or the sixth reference signal may include at least one of the following: a CSI-RS, a DMRS, a PT-RS, a SRS, a SSB, or a PRS.

FIG. 16 is a schematic diagram of a structural composition of another communication apparatus according to an embodiment of the present disclosure, which is applied to a network device. As shown in FIG. 16, in the embodiments corresponding to FIG. 16, the communication apparatus 1600 includes a communication unit 1601.

The communication unit 1601 is configured to receive a first set and/or send a second set.

Herein, the first set is used to indicate at least one of the following: one or more first reference signals supported by a terminal device; or one or more first processing models supported by the terminal device. The first reference signal is non-orthogonally transmitted with a data signal; and the first processing model is used to process at least one of the following: the first reference signal and the data signal that are non-orthogonally transmitted; or the first reference signal.

Herein, the second set is used to indicate at least one of the following: one or more second reference signals supported by the communication apparatus; or one or more second processing models supported by the communication apparatus. The second reference signal is non-orthogonally transmitted with the data signal; and the second processing model is used to process at least one of the following: the second reference signal and the data signal that are non-orthogonally transmitted; or the second reference signal.

In some embodiments, the communication unit 1601 includes a sending unit and/or a receiving unit. The sending unit is configured to send the second set, and the receiving unit is configured to receive the first set. In the following embodiments, the sending unit is configured to send information, and the receiving unit is configured to receive information.

In some embodiments, the communication apparatus 1600 may further include a determination unit, and the determination unit may be configured to determine the second set.

In some embodiments, the communication unit 1601 may further be configured to send a third set. The third set may be a subset of the first set. The third set may be used to indicate at least one of the following: one or more third reference signals supported by the communication apparatus; or one or more third processing models supported by the communication apparatus. The third reference signal may be non-orthogonally transmitted with the data signal. The third processing model may be used to process at least one of the following: the third reference signal and the data signal that are non-orthogonally transmitted; or the third reference signal.

In some embodiments, the third set may be included or carried in at least one of the following: a broadcast message, an RRC message, an MAC CE, DCI, a downlink message during a random access procedure, a PDCCH, a PDSCH, an AI/ML dedicated downlink channel, or capability indication information of the communication apparatus.

In some embodiments, the communication unit 1601 may further be configured to receive a fourth set. The fourth set may be a subset of the second set. The fourth set may be used to indicate at least one of the following: one or more fourth reference signals supported by the terminal device; or one or more fourth processing models supported by the terminal device. The fourth reference signal may be non-orthogonally transmitted with the data signal. The fourth processing model may be used to process at least one of the following: the fourth reference signal and the data signal that are non-orthogonally transmitted; or the fourth reference signal.

In some embodiments, the fourth set may be included or carried in at least one of the following: an RRC message, UCI, an uplink message during a random access procedure, a PUCCH, a PUSCH, an AI/ML dedicated uplink channel, or capability reporting information of the terminal device.

In some embodiments, the communication unit 1601 may further be configured to send first indication information. The first indication information may indicate a fifth reference signal. The fifth reference signal may be included at least one of the following: the one or more first reference signals; one or more first reference signals associated with the one or more first processing models; one or more fourth reference signals; or one or more fourth reference signals associated with one or more fourth processing models.

In some embodiments, the communication unit 1601 may further be configured to receive second indication information. The second indication information may indicate a sixth reference signal. The sixth reference signal may be included at least one of the following: the one or more second reference signals; one or more second reference signals associated with the one or more second processing models; one or more third reference signals; or one or more third reference signals associated with one or more third processing models.

In some embodiments, the communication unit 1601 may further be configured to send third indication information. The third indication information may indicate to report the first set.

In some embodiments, the third indication information may be included or carried in at least one of the following: a broadcast message, an RRC message, an MAC CE, DCI, a downlink message during a random access procedure, a PDCCH, a PDSCH, or an AI/ML dedicated downlink channel.

In some embodiments, the communication unit 1601 may further be configured to receive fourth indication information. The fourth indication information may indicate the communication apparatus to send the second set.

In some embodiments, the fourth indication information may be included or carried in at least one of the following: an RRC message, UCI, an uplink message during a random access procedure, a PUCCH, a PUSCH, or an AI/ML dedicated uplink channel.

In some embodiments, the communication unit 1601 may further be configured to receive first capability information; and the first capability information may indicate that the terminal device supports to non-orthogonally transmit a signal and/or supports to process the signal that is non-orthogonally transmitted.

In some embodiments, the first capability information may be included or carried in at least one of the following: an RRC message, UCI, an uplink message during a random access procedure, a PUCCH, a PUSCH, an AI/ML dedicated uplink channel, or capability reporting information of the terminal device.

In some embodiments, the communication unit 1601 may further be configured to send second capability information; and the second capability information may indicate that the network device supports to non-orthogonally transmit a signal and/or supports to process the signal that is non-orthogonally transmitted.

In some embodiments, the second capability information may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

In some embodiments, the first set may be included or carried in at least one of the following: an RRC message, UCI, an uplink message during a random access procedure, a PUCCH, a PUSCH, an AI/ML dedicated uplink channel, or capability reporting information of the terminal device.

In some embodiments, the one or more first reference signals may include one or more first uplink signals; and/or the one or more first reference signals may include one or more first downlink signals.

In some embodiments, the first set may include at least one of the following: one or more identifiers of one or more first uplink signals; one or more identifiers of one or more first downlink signals; or one or more identifiers of the one or more first processing models.

In some embodiments, the first set may be used to indicate one or more types of first uplink signal sets; and/or the first set may include one or more identifiers of the one or more types of first uplink signal sets. For different types of first uplink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the first set may be used to indicate one or more types of first downlink signal sets; and/or the first set includes one or more identifiers of the one or more types of first downlink signal sets. For different types of first downlink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the first set may be used to indicate one or more types of first processing models; and/or the first set may include one or more identifiers of the one or more types of first processing models. For first reference signals associated with different types of first processing models, at least one of the following may be different: a signal pattern, transmission power setting, an applicable cell type, an applicable scenario, a moving speed of the terminal device, a transmission configuration, an antenna configuration, channel information, or a format sequence.

In some embodiments, the second set may be included or carried in at least one of the following: a broadcast message, an RRC message, an MAC CE, DCI, a downlink message during a random access procedure, a PDCCH, a PDSCH, an AI/ML dedicated downlink channel, or capability indication information of the network device.

In some embodiments, the one or more second reference signals may include one or more second uplink signals; and/or the one or more second reference signals may include one or more second downlink signals.

In some embodiments, the second set may include at least one of the following: one or more identifiers of one or more second uplink signals; one or more identifiers of one or more second downlink signals; or one or more identifiers of the one or more second processing models.

In some embodiments, the second set may be used to indicate one or more types of second uplink signal sets; and/or the second set includes one or more identifiers of the one or more types of second uplink signal sets. For different types of second uplink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the second set may be used to indicate one or more types of second downlink signal sets; and/or the second set may include one or more identifiers of the one or more types of second downlink signal sets. For different types of second downlink signal sets, at least one of the following may be different: a signal pattern, a transmission power setting, an applicable cell type, an applicable scenario, a moving speed of the terminal device, a transmission configuration, an antenna configuration, channel information, or a format sequence.

In some embodiments, the second set may be used to indicate one or more types of second processing models; and/or the second set may include one or more identifiers of the one or more types of second processing models. For second reference signals associated with different types of second processing models, at least one of the following may be different: a signal pattern, a transmission power setting, an applicable cell type, an applicable scenario, a moving speed of the terminal device, a transmission configuration, an antenna configuration, channel information, or a format sequence.

In some embodiments, a difference in signal patterns may include at least one of the following:
the reference signal that is non-orthogonally transmitted with the data signal existing on different time-domain resources; or
the reference signal that is non-orthogonally transmitted with the data signal existing on different frequency-domain resources.

In some embodiments, transmission power settings corresponding to any two of the following may be different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

In some embodiments, at least one of the first reference signals, the second reference signals, the third reference signals, the fourth reference signals, the fifth reference signal, or the sixth reference signal may include at least one of the following: a CSI-RS, a DMRS, a PT-RS, a SRS, a SSB, or a PRS.

It should be understood by those skilled in the art that the related description of the above communication apparatus in the embodiments of the present disclosure may be understood with reference to the related description of the communication method in the embodiments of the present disclosure.

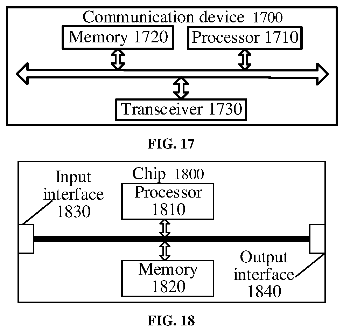

FIG. 17 is a schematic structural diagram of a communication device according to an embodiment of the present disclosure. The communication device 1700 may include one of the following: a terminal device, or a network device. The communication device 1700 shown in FIG. 17 may include a processor 1710, a memory 1720, and a transceiver 1730. The memory 1720 is configured to store a computer program, and the processor 1710 is configured to call and run the computer program stored in the memory 1720 and cooperate with the transceiver 1730 to perform the method in any one of the aforementioned embodiments.

Optionally, the memory 1720 may be a separate device independent of the processor 1710, or may be integrated into the processor 1710. In some embodiments, the processor 1710 may control the transceiver 1730 to communicate with other devices. Specifically, the transceiver 1730 may transmit information or data to other devices, or may receive information or data from other devices. Herein, the transceiver 1730 may include a transmitter and a receiver. The transceiver 1730 may further include one or more antennas.

In some embodiments, the communication device 1700 may specifically be the network device in the embodiments of the present disclosure, and the communication device 1700 may implement the corresponding process implemented by the network device in each of the methods in the embodiments of the present disclosure, which are not repeated herein for the sake of brevity.

In some embodiments, the communication device 1700 may specifically be the terminal device in the embodiments of the present disclosure, and the communication device 1700 may implement the corresponding process implemented by the terminal device in each of the methods in the embodiments of the present disclosure, which are not repeated herein for the sake of brevity.

According to an embodiment of the present disclosure, a computer storage medium is further provided. The computer storage medium has stored one or more programs, which may be executed by one or more processors to implement the communication method in any one of the aforementioned embodiments of the present disclosure.

In some embodiments, the computer-readable storage medium may be applied to the terminal device and the network device in the embodiments of the present disclosure, and the computer program(s) enable a computer to execute the corresponding process implemented by the terminal device or the network device in each of the methods in the embodiments of the present disclosure, which are not repeated herein for the sake of brevity.

FIG. 18 is a schematic structural diagram of a chip according to an embodiment of the present disclosure. The chip 1800 shown in FIG. 18 includes a processor 1810, which is configured to call and run a computer program from a memory to implement the method in any one of the aforementioned embodiments of the present disclosure.

In some embodiments, as shown in FIG. 18, the chip 1800 may further include a memory 1820. Herein, the processor 1810 may call and run a computer program from the memory 1820 to implement each of the methods in the embodiments of the present disclosure.

Herein, the memory 1820 may be a separate device independent of the processor 1810, or may be integrated into the processor 1810.

In some embodiments, the chip 1800 may further include an input interface 1830. Herein, the processor 1810 may control the input interface 1830 to communicate with other devices or chips. Specifically, the input interface 1830 may acquire information or data from other devices or chips.

In some embodiments, the chip 1800 may further include an output interface 1840. Herein, the processor 1810 may control the output interface 1840 to communicate with other devices or chips. Specifically, the output interface 1840 may output information or data to other devices or chips.

In some embodiments, the chip may be applied to the network device in the embodiments of the present disclosure, and the chip may implement the corresponding process implemented by the network device in each of the methods in the embodiments of the present disclosure, which are not repeated herein for the sake of brevity.

In some embodiments, the chip may be applied to the terminal device in the embodiments of the present disclosure, and the chip may implement the corresponding process implemented by the terminal device in each of the methods in the embodiments of the present disclosure, which are not repeated herein for the sake of brevity.

It should be understood that the aforementioned chip in the embodiments of the present disclosure may also be referred to as a system level chip, a system chip, a chip system, or a system on chip, etc.

According to an embodiment of the present disclosure, a computer program product is further provided. The computer program product includes a computer storage medium storing a computer program, and the computer program includes instructions executable by at least one processor. The instructions, when executed by the at least one processor, implement the communication method in any one of the embodiments of the present disclosure.

In some embodiments, the computer program product may be applied to the terminal device or the network device in the embodiments of the present disclosure, and the computer program instructions enable a computer to execute the corresponding process implemented by the terminal device or the network device in each of the methods in the embodiments of the present disclosure, which are not repeated herein for the sake of brevity.

Optionally, the computer program product in the embodiments of the present disclosure may also be referred to as a software product in some other embodiments.

According to an embodiment of the present disclosure, a computer program is further provided. The computer program enables a computer to execute the communication method in any one of the embodiments of the present disclosure.

In some embodiments, the computer program may be applied to the terminal device or the network device in the embodiments of the present disclosure. The computer program, when running on a computer, causes the computer to execute the corresponding process implemented by the terminal device or the network device in each of the methods in the embodiments of the present disclosure, which are not repeated herein for the sake of brevity.

The processor, the communication apparatus, or the chip in the embodiments of the present disclosure may be an integrated circuit chip having signal processing capability. During the implementation process, each operation of the above method embodiments may be accomplished by an integrated logic circuit of hardware or by an instruction in form of software in the processor. The aforementioned processor, communication apparatus, or chip may include an integration of any one or more of the following: a general purpose processor, an application specific integrated circuit (ASIC), a digital signal processor (DSP), a digital signal processing device (DSPD), a programmable logic device (PLD), a field programmable gate array (FPGA), a central processing unit (CPU), a graphics processing unit (GPU), an embedded neural-network processing unit (NPU), a controller, a microcontroller, a microprocessor, a programmable logic device, a discrete gate or transistor logic device, or a discrete hardware component. The processor may implement or perform the methods, operations, and logical block diagrams disclosed in the embodiments of the present disclosure. The general purpose processor may be a microprocessor or any conventional processor or the like. The operations of the methods disclosed in the embodiments of the present disclosure may be directly accomplished by the hardware decoding processor, or be accomplished by a combination of hardware and software modules in the decoding processor. The software module may be located in a Random Access Memory (RAM), a flash memory, a Read-Only Memory (ROM), a Programmable ROM (PROM) or an electrically erasable programmable memory, a register and other mature storage medium in the art. The storage medium is located in the memory, and the processor reads information in the memory to implement the operations of each of the above methods in combination with the hardware.

It may be understood that the memory or the computer storage medium in the embodiments of the present disclosure may be a transitory memory or a non-transitory memory, or may include both the transitory memory and the non-transitory memory. Herein, the non-transitory memory may be a ROM, a PROM, an Erasable PROM (EPROM), an Electrically EPROM (EEPROM), or a flash memory. The transitory memory may be a RAM that used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories or computer storage media are examples but not limiting descriptions. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include, but is not limited to, these and any other suitable types of memories.

It may be appreciated by those skilled in the art that the various example units and algorithm operations described in conjunction with the embodiments disclosed herein may be implemented in electronic hardware or a combination of computer software and electronic hardware. Whether such functions are performed in hardware or software depends on specific applications and design constraints of the technical solution. The professionals may use different methods for specific applications to implement the described functions, but such implementation should not be considered beyond the scope of the present disclosure.

It may be clearly appreciated by those skilled in the art that, for convenience and conciseness of description, regarding the specific operating processes of the systems, apparatuses and units described above, reference may be made to the corresponding processes in the aforementioned method embodiments, which are not repeated herein.

In the several embodiments provided in the present disclosure, it should be understood that the disclosed systems, apparatuses and methods may be implemented by other ways. For example, the apparatus embodiments described above are only illustrative. For example, the division of the units is only a logical functional division, and in practice, there may be other divisions. For example, multiple units or components may be combined or integrated into another system, or some features may be ignored or not performed. In addition, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs, to achieve the purposes of the solutions in the embodiments.

Furthermore, the functional units in the various embodiments of the present disclosure may be integrated in one processing unit, or the units may exist physically individually, or two or more units may be integrated in one unit.

In any embodiment of the present disclosure, an interval, a time period, within a duration range, within a duration, or within a time window may include all endpoint times, or may include part of the endpoint times (e.g., including a left endpoint time but not including a right endpoint time, or including the right endpoint time but not including the left endpoint time), or may not include endpoint times.

The functions may be stored in a computer-readable storage medium if the functions are implemented in form of software functional units and sold or used as stand-alone products. Based on such understanding, the essence of the technical solutions of the present disclosure, or the part that contributes to the related art, or part of the technical solutions may be embodied in the form of a software product, and such computer software product is stored in a storage medium, and includes several instructions used to enable a computer device (which may be a personal computer, a server, or a network device, etc.) to implement all or part of the operations of the methods described in the various embodiments of the present disclosure. The aforementioned storage medium includes a Universal Serial Bus (USB) flash drive, a removable hard disk, a Read-Only Memory (ROM), a Random Access Memory (RAM), a magnetic disk, an optical disk, or any other medium that may store program codes.

The descriptions above are merely specific embodiments of the present disclosure, but the scope of protection of the present disclosure is not limited thereto. Any change or replacement readily contemplated by those skilled in the art within the technical scope disclosed in the present disclosure shall fall within the scope of protection of the present disclosure. Accordingly, the scope of protection of the present disclosure shall be subject to the scope of protection of the claims.

## Claims

1. A communication method, comprising:
sending, by a terminal device, a first set; and/or receiving, by the terminal device, a second set;
wherein the first set is used to indicate at least one of the following: one or more first reference signals supported by the terminal device, or one or more first processing models supported by the terminal device; the first reference signal is non-orthogonally transmitted with a data signal; and the first processing model is used to process at least one of the following: the first reference signal and the data signal that are non-orthogonally transmitted, or the first reference signal; and
wherein the second set is used to indicate at least one of the following: one or more second reference signals supported by a network device, or one or more second processing models supported by the network device; the second reference signal is non-orthogonally transmitted with the data signal; and the second processing model is used to process at least one of the following: the second reference signal and the data signal that are non-orthogonally transmitted, or the second reference signal.

2. The method of claim 1, further comprising:
receiving, by the terminal device, a third set; wherein the third set is a subset of the first set; the third set is used to indicate at least one of the following: one or more third reference signals supported by the network device, or one or more third processing models supported by the network device; the third reference signal is non-orthogonally transmitted with the data signal; and the third processing model is used to process at least one of the following: the third reference signal and the data signal that are non-orthogonally transmitted, or the third reference signal.

3. The method of claim 2, wherein the third set is comprised or carried in at least one of the following:
a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (Al)/machine learning (ML) a dedicated downlink channel, or capability indication information of the network device.

4. The method of claim 1, further comprising:
sending, by the terminal device, a fourth set; wherein the fourth set is a subset of the second set; the fourth set is used to indicate at least one of the following: one or more fourth reference signals supported by the terminal device, or one or more fourth processing models supported by the terminal device; the fourth reference signal is non-orthogonally transmitted with the data signal; and the fourth processing model is used to process at least one of the following: the fourth reference signal and the data signal that are non-orthogonally transmitted, or the fourth reference signal.

5. The method of claim 4, wherein the fourth set is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

6. The method of any one of claims 1, 4 and 5, further comprising:
receiving, by the terminal device, first indication information; wherein the first indication information indicates a fifth reference signal; and the fifth reference signal is comprised in at least one of the following: the one or more first reference signals, one or more first reference signals associated with the one or more first processing models, one or more fourth reference signals, or one or more fourth reference signals associated with one or more fourth processing models.

7. The method of any one of claims 1 to 3, further comprising:
sending, by the terminal device, second indication information; wherein the second indication information indicates a sixth reference signal; and the sixth reference signal is comprised in at least one of the following: the one or more second reference signals, one or more second reference signals associated with the one or more second processing models, one or more third reference signals, or one or more third reference signals associated with one or more third processing models.

8. The method of any one of claims 1 to 7, further comprising:
receiving, by the terminal device, third indication information; wherein the third indication information indicates to report the first set.

9. The method of claim 8, wherein the third indication information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), or an artificial intelligence (AI)/machine learning (ML) dedicated downlink channel.

10. The method of any one of claims 1 to 9, further comprising:
sending, by the terminal device, fourth indication information; wherein the fourth indication information indicates the network device to send the second set.

11. The method of claim 10, wherein the fourth indication information is comprised or carried in at least one of the following: a radio resource control (RRC) message, uplink control information (UCI), an uplink message during a random access procedure, a physical uplink control channel (PUCCH), a physical uplink shared channel (PUSCH), or an artificial intelligence (AI)/machine learning (ML) dedicated uplink channel.

12. The method of any one of claims 1 to 11, further comprising:
sending, by the terminal device, first capability information; wherein the first capability information indicates that the terminal device supports to non-orthogonally transmit a signal and/or supports to process the signal that is non-orthogonally transmitted.

13. The method of claim 12, wherein the first capability information is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

14. The method of any one of claims 1 to 13, further comprising:
receiving, by the terminal device, second capability information; wherein the second capability information indicates that the network device supports to non-orthogonally transmit a signal and/or supports to process the signal that is non-orthogonally transmitted.

15. The method of claim 14, wherein the second capability information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

16. The method of any one of claims 1 to 15, wherein the first set is comprised or carried in at least one of the following:
a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

17. The method of any one of claims 1 to 16, wherein the one or more first reference signals comprise one or more first uplink signals; and/or the one or more first reference signals comprise one or more first downlink signals.

18. The method of any one of claims 1 to 17, wherein the first set comprises at least one of the following: one or more identifiers of one or more first uplink signals, one or more identifiers of one or more first downlink signals, or one or more identifiers of the one or more first processing models.

19. The method of any one of claims 1 to 18, wherein the first set is used to indicate one or more types of first uplink signal sets, and/or the first set comprises one or more identifiers of the one or more types of first uplink signal sets; and for different types of first uplink signal sets, at least one of the following is different: a signal pattern, a transmission power setting, an applicable cell type, an applicable scenario, a moving speed of the terminal device, a transmission configuration, an antenna configuration, channel information, or a format sequence.

20. The method of any one of claims 1 to 19, wherein the first set is used to indicate one or more types of first downlink signal sets, and/or the first set comprises one or more identifiers of the one or more types of first downlink signal sets; and for different types of first downlink signal sets, at least one of the following is different: a signal pattern, a transmission power setting, an applicable cell type, an applicable scenario, a moving speed of the terminal device, a transmission configuration, an antenna configuration, channel information, or a format sequence.

21. The method of any one of claims 1 to 20, wherein the first set is used to indicate one or more types of first processing models, and/or the first set comprises one or more identifiers of the one or more types of first processing models; and for first reference signals associated with different types of first processing models, at least one of the following is different: a signal pattern, a transmission power setting, an applicable cell type, an applicable scenario, a moving speed of the terminal device, a transmission configuration, an antenna configuration, channel information, or a format sequence.

22. The method of any one of claims 1 to 21, wherein the second set is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

23. The method of any one of claims 1 to 22, wherein the one or more second reference signals comprise one or more second uplink signals; and/or the one or more second reference signals comprise one or more second downlink signals.

24. The method of any one of claims 1 to 23, wherein the second set comprises at least one of the following: one or more identifiers of one or more second uplink signals, one or more identifiers of one or more second downlink signals, or one or more identifiers of the one or more second processing models.

25. The method of any one of claims 1 to 24, wherein the second set is used to indicate one or more types of second uplink signal sets, and/or the second set comprises one or more identifiers of the one or more types of second uplink signal sets; and for different types of second uplink signal sets, at least one of the following is different:
a signal pattern, a transmission power setting, an applicable cell type, an applicable scenario, a moving speed of the terminal device, a transmission configuration, an antenna configuration, channel information, or a format sequence.

26. The method of any one of claims 1 to 25, wherein the second set is used to indicate one or more types of second downlink signal sets, and/or the second set comprises one or more identifiers of the one or more types of second downlink signal sets; and for different types of second downlink signal sets, at least one of the following is different:
a signal pattern, a transmission power setting, an applicable cell type, an applicable scenario, a moving speed of the terminal device, a transmission configuration, an antenna configuration, channel information, or a format sequence.

27. The method of any one of claims 1 to 26, wherein the second set is used to indicate one or more types of second processing models, and/or the second set comprises one or more identifiers of the one or more types of second processing models; and for second reference signals associated with different types of second processing models, at least one of the following is different:
a signal pattern, a transmission power setting, an applicable cell type, an applicable scenario, a moving speed of the terminal device, a transmission configuration, an antenna configuration, channel information, or a format sequence.

28. The method of any one of claims 19 to 21 and 25 to 27, wherein a difference in signal patterns comprises at least one of the following:
the reference signal that is non-orthogonally transmitted with the data signal existing on different time-domain resources; or
the reference signal that is non-orthogonally transmitted with the data signal existing on different frequency-domain resources.

29. The method of any one of claims 19 to 21 and 25 to 28, wherein transmission power settings corresponding to any two of the following are different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

30. The method of any one of claims 1 to 29, wherein at least one of the one or more first reference signals, the one or more second reference signals, one or more third reference signals, one or more fourth reference signals, a fifth reference signal, or a sixth reference signal comprises at least one of the following:
a channel state information reference signal (CSI-RS), a demodulation reference signal (DMRS), a phase tracking reference signal (PT-RS), a sounding reference signal (SRS), a synchronization signal block (SSB), or a positioning reference signal (PRS).

31. A communication method, comprising:
receiving, by a network device, a first set; and/or sending, by the network device, a second set;
wherein the first set is used to indicate at least one of the following: one or more first reference signals supported by a terminal device, or one or more first processing models supported by the terminal device; the first reference signal is non-orthogonally transmitted with a data signal; and the first processing model is used to process at least one of the following: the first reference signal and the data signal that are non-orthogonally transmitted, or the first reference signal; and
wherein the second set is used to indicate at least one of the following: one or more second reference signals supported by the network device, or one or more second processing models supported by the network device; the second reference signal is non-orthogonally transmitted with the data signal; and the second processing model is used to process at least one of the following: the second reference signal and the data signal that are non-orthogonally transmitted, or the second reference signal.

32. The method of claim 31, further comprising:
sending, by the network device, a third set; wherein the third set is a subset of the first set; the third set is used to indicate at least one of the following: one or more third reference signals supported by the network device, or one or more third processing models supported by the network device; the third reference signal is non-orthogonally transmitted with the data signal; and the third processing model is used to process at least one of the following: the third reference signal and the data signal that are non-orthogonally transmitted, or the third reference signal.

33. The method of claim 32, wherein the third set is comprised or carried in at least one of the following:
a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

34. The method of claim 31, further comprising:
receiving, by the network device, a fourth set; wherein the fourth set is a subset of the second set; the fourth set is used to indicate at least one of the following: one or more fourth reference signals supported by the terminal device, or one or more fourth processing models supported by the terminal device; the fourth reference signal is non-orthogonally transmitted with the data signal; and the fourth processing model is used to process at least one of the following: the fourth reference signal and the data signal that are non-orthogonally transmitted, or the fourth reference signal.

35. The method of claim 34, wherein the fourth set is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

36. The method of any one of claims 31, 34 and 35, further comprising:
sending, by the network device, first indication information; wherein the first indication information indicates a fifth reference signal; and the fifth reference signal is comprised in at least one of the following: the one or more first reference signals, one or more first reference signals associated with the one or more first processing models, one or more fourth reference signals, or one or more fourth reference signals associated with one or more fourth processing models.

37. The method of any one of claims 31 to 33, further comprising:
receiving, by the network device, second indication information; wherein the second indication information indicates a sixth reference signal; and the sixth reference signal is comprised in at least one of the following: the one or more second reference signals, one or more second reference signals associated with the one or more second processing models, one or more third reference signals, or one or more third reference signals associated with one or more third processing models.

38. The method of any one of claims 31 to 37, further comprising:
sending, by the network device, third indication information; wherein the third indication information indicates to report the first set.

39. The method of claim 38, wherein the third indication information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), or an artificial intelligence (AI)/machine learning (ML) dedicated downlink channel.

40. The method of any one of claims 31 to 39, further comprising:
receiving, by the network device, fourth indication information; wherein the fourth indication information indicates the network device to send the second set.

41. The method of claim 40, wherein the fourth indication information is comprised or carried in at least one of the following: a radio resource control (RRC) message, uplink control information (UCI), an uplink message during a random access procedure, a physical uplink control channel (PUCCH), a physical uplink shared channel (PUSCH), or an artificial intelligence (AI)/machine learning (ML) dedicated uplink channel.

42. The method of any one of claims 31 to 41, further comprising:
receiving, by the network device, first capability information; wherein the first capability information indicates that the terminal device supports to non-orthogonally transmit a signal and/or supports to process the signal that is non-orthogonally transmitted.

43. The method of claim 42, wherein the first capability information is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

44. The method of any one of claims 31 to 43, further comprising:
sending, by the network device, second capability information; wherein the second capability information indicates that the network device supports to non-orthogonally transmit a signal and/or supports to process the signal that is non-orthogonally transmitted.

45. The method of claim 44, wherein the second capability information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

46. The method of any one of claims 31 to 45, wherein the first set is comprised or carried in at least one of the following:
a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

47. The method of any one of claims 31 to 46, wherein the one or more first reference signals comprise one or more first uplink signals; and/or the one or more first reference signals comprise one or more first downlink signals.

48. The method of any one of claims 31 to 47, wherein the first set comprises at least one of the following: one or more identifiers of one or more first uplink signals, one or more identifiers of one or more first downlink signals, or one or more identifiers of the one or more first processing models.

49. The method of any one of claims 31 to 48, wherein the first set is used to indicate one or more types of first uplink signal sets, and/or the first set comprises one or more identifiers of the one or more types of first uplink signal sets; and for different types of first uplink signal sets, at least one of the following is different:
a signal pattern, a transmission power setting, an applicable cell type, an applicable scenario, a moving speed of the terminal device, a transmission configuration, an antenna configuration, channel information, or a format sequence.

50. The method of any one of claims 31 to 49, wherein the first set is used to indicate one or more types of first downlink signal sets, and/or the first set comprises one or more identifiers of the one or more types of first downlink signal sets; and for different types of first downlink signal sets, at least one of the following is different:
a signal pattern, a transmission power setting, an applicable cell type, an applicable scenario, a moving speed of the terminal device, a transmission configuration, an antenna configuration, channel information, or a format sequence.

51. The method of any one of claims 31 to 50, wherein the first set is used to indicate one or more types of first processing models, and/or the first set comprises one or more identifiers of the one or more types of first processing models; and for first reference signals associated with different types of first processing models, at least one of the following is different:
a signal pattern, a transmission power setting, an applicable cell type, an applicable scenario, a moving speed of the terminal device, a transmission configuration, an antenna configuration, channel information, or a format sequence.

52. The method of any one of claims 31 to 51, wherein the second set is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

53. The method of any one of claims 31 to 52, wherein the one or more second reference signals comprise one or more second uplink signals; and/or the one or more second reference signals comprise one or more second downlink signals.

54. The method of any one of claims 31 to 53, wherein the second set comprises at least one of the following: one or more identifiers of one or more second uplink signals, one or more identifiers of one or more second downlink signals, or one or more identifiers of the one or more second processing models.

55. The method of any one of claims 31 to 54, wherein the second set is used to indicate one or more types of second uplink signal sets, and/or the second set comprises one or more identifiers of the one or more types of second uplink signal sets; and for different types of second uplink signal sets, at least one of the following is different:
a signal pattern, a transmission power setting, an applicable cell type, an applicable scenario, a moving speed of the terminal device, a transmission configuration, an antenna configuration, channel information, or a format sequence.

56. The method of any one of claims 31 to 55, wherein the second set is used to indicate one or more types of second downlink signal sets, and/or the second set comprises one or more identifiers of the one or more types of second downlink signal sets; and for different types of second downlink signal sets, at least one of the following is different:
a signal pattern, a transmission power setting, an applicable cell type, an applicable scenario, a moving speed of the terminal device, a transmission configuration, an antenna configuration, channel information, or a format sequence.

57. The method of any one of claims 31 to 56, wherein the second set is used to indicate one or more types of second processing models, and/or the second set comprises one or more identifiers of the one or more types of second processing models; and for second reference signals associated with different types of second processing models, at least one of the following is different:
a signal pattern, a transmission power setting, an applicable cell type, an applicable scenario, a moving speed of the terminal device, a transmission configuration, an antenna configuration, channel information, or a format sequence.

58. The method of any one of claims 49 to 51 and 55 to 57, wherein a difference in signal patterns comprises at least one of the following:
the reference signal that is non-orthogonally transmitted with the data signal existing on different time-domain resources; or
the reference signal that is non-orthogonally transmitted with the data signal existing on different frequency-domain resources.

59. The method of any one of claims 49 to 51 and 55 to 58, wherein transmission power settings corresponding to any two of the following are different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

60. The method of any one of claims 31 to 59, wherein at least one of the one or more first reference signals, the one or more second reference signals, one or more third reference signals, one or more fourth reference signals, a fifth reference signal, or a sixth reference signal comprises at least one of the following:
a channel state information reference signal (CSI-RS), a demodulation reference signal (DMRS), a phase tracking reference signal (PT-RS), a sounding reference signal (SRS), a synchronization signal block (SSB), or a positioning reference signal (PRS).

61. A communication apparatus, comprising:
a communication unit, configured to send a first set and/or receive a second set;
wherein the first set is used to indicate at least one of the following: one or more first reference signals supported by the communication apparatus, or one or more first processing models supported by the communication apparatus; the first reference signal is non-orthogonally transmitted with a data signal; and the first processing model is used to process at least one of the following: the first reference signal and the data signal that are non-orthogonally transmitted, or the first reference signal; and
wherein the second set is used to indicate at least one of the following: one or more second reference signals supported by a network device, or one or more second processing models supported by the network device; the second reference signal is non-orthogonally transmitted with the data signal; and the second processing model is used to process at least one of the following: the second reference signal and the data signal that are non-orthogonally transmitted, or the second reference signal.

62. The communication apparatus of claim 61, wherein
the communication unit is further configured to receive a third set; the third set is a subset of the first set; the third set is used to indicate at least one of the following: one or more third reference signals supported by the network device, or one or more third processing models supported by the network device; the third reference signal is non-orthogonally transmitted with the data signal; and the third processing model is used to process at least one of the following: the third reference signal and the data signal that are non-orthogonally transmitted, or the third reference signal.

63. The communication apparatus of claim 62, wherein the third set is comprised or carried in at least one of the following:
a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

64. The communication apparatus of claim 61, wherein
the communication unit is further configured to send a fourth set; the fourth set is a subset of the second set; the fourth set is used to indicate at least one of the following: one or more fourth reference signals supported by the communication apparatus, or one or more fourth processing models supported by the communication apparatus; the fourth reference signal is non-orthogonally transmitted with the data signal; and the fourth processing model is used to process at least one of the following: the fourth reference signal and the data signal that are non-orthogonally transmitted, or the fourth reference signal.

65. The communication apparatus of claim 64, wherein the fourth set is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the communication apparatus.

66. The communication apparatus of any one of claims 61, 64 and 65, wherein
the communication unit is further configured to receive first indication information; the first indication information indicates a fifth reference signal; and the fifth reference signal is comprised in at least one of the following: the one or more first reference signals, one or more first reference signals associated with the one or more first processing models, one or more fourth reference signals, or one or more fourth reference signals associated with one or more fourth processing models.

67. The communication apparatus of any one of claims 61 to 63, wherein
the communication unit is further configured to send second indication information; the second indication information indicates a sixth reference signal; and the sixth reference signal is comprised in at least one of the following: the one or more second reference signals, one or more second reference signals associated with the one or more second processing models, one or more third reference signals, or one or more third reference signals associated with one or more third processing models.

68. The communication apparatus of any one of claims 61 to 67, wherein
the communication unit is further configured to receive third indication information; and the third indication information indicates to report the first set.

69. The communication apparatus of claim 68, wherein the third indication information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), or an artificial intelligence (Al)/machine learning (ML) dedicated downlink channel.

70. The communication apparatus of any one of claims 61 to 69, wherein
the communication unit is further configured to send fourth indication information; and the fourth indication information indicates the network device to send the second set.

71. The communication apparatus of claim 70, wherein the fourth indication information is comprised or carried in at least one of the following: a radio resource control (RRC) message, uplink control information (UCI), an uplink message during a random access procedure, a physical uplink control channel (PUCCH), a physical uplink shared channel (PUSCH), or an artificial intelligence (AI)/machine learning (ML) dedicated uplink channel.

72. The communication apparatus of any one of claims 61 to 71, wherein
the communication unit is further configured to send first capability information; and the first capability information indicates that the communication apparatus supports to non-orthogonally transmit a signal and/or supports to process the signal that is non-orthogonally transmitted.

73. The communication apparatus of claim 72, wherein the first capability information is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the communication apparatus.

74. The communication apparatus of any one of claims 61 to 73, wherein
the communication unit is further configured to receive second capability information; and the second capability information indicates that the network device supports to non-orthogonally transmit a signal and/or supports to process the signal that is non-orthogonally transmitted.

75. The communication apparatus of claim 74, wherein the second capability information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

76. The communication apparatus of any one of claims 61 to 75, wherein the first set is comprised or carried in at least one of the following:
a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the communication apparatus.

77. The communication apparatus of any one of claims 61 to 76, wherein the one or more first reference signals comprise one or more first uplink signals; and/or the one or more first reference signals comprise one or more first downlink signals.

78. The communication apparatus of any one of claims 61 to 77, wherein the first set comprises at least one of the following: one or more identifiers of one or more first uplink signals, one or more identifiers of one or more first downlink signals, or one or more identifiers of the one or more first processing models.

79. The communication apparatus of any one of claims 61 to 78, wherein the first set is used to indicate one or more types of first uplink signal sets, and/or the first set comprises one or more identifiers of the one or more types of first uplink signal sets; and for different types of first uplink signal sets, at least one of the following is different:
a signal pattern, a transmission power setting, an applicable cell type, an applicable scenario, a moving speed of the terminal device, a transmission configuration, an antenna configuration, channel information, or a format sequence.

80. The communication apparatus of any one of claims 61 to 79, wherein the first set is used to indicate one or more types of first downlink signal sets, and/or the first set comprises one or more identifiers of the one or more types of first downlink signal sets; and for different types of first downlink signal sets, at least one of the following is different:
a signal pattern, a transmission power setting, an applicable cell type, an applicable scenario, a moving speed of the terminal device, a transmission configuration, an antenna configuration, channel information, or a format sequence.

81. The communication apparatus of any one of claims 61 to 80, wherein the first set is used to indicate one or more types of first processing models, and/or the first set comprises one or more identifiers of the one or more types of first processing models; and for first reference signals associated with different types of first processing models, at least one of the following is different:
a signal pattern, a transmission power setting, an applicable cell type, an applicable scenario, a moving speed of the terminal device, a transmission configuration, an antenna configuration, channel information, or a format sequence.

82. The communication apparatus of any one of claims 61 to 81, wherein the second set is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the network device.

83. The communication apparatus of any one of claims 61 to 82, wherein the one or more second reference signals comprise one or more second uplink signals; and/or the one or more second reference signals comprise one or more second downlink signals.

84. The communication apparatus of any one of claims 61 to 83, wherein the second set comprises at least one of the following: one or more identifiers of one or more second uplink signals, one or more identifiers of one or more second downlink signals, or one or more identifiers of the one or more second processing models.

85. The communication apparatus of any one of claims 61 to 84, wherein the second set is used to indicate one or more types of second uplink signal sets, and/or the second set comprises one or more identifiers of the one or more types of second uplink signal sets; and for different types of second uplink signal sets, at least one of the following is different:
a signal pattern, a transmission power setting, an applicable cell type, an applicable scenario, a moving speed of the terminal device, a transmission configuration, an antenna configuration, channel information, or a format sequence.

86. The communication apparatus of any one of claims 61 to 85, wherein the second set is used to indicate one or more types of second downlink signal sets, and/or the second set comprises one or more identifiers of the one or more types of second downlink signal sets; and for different types of second downlink signal sets, at least one of the following is different:
a signal pattern, a transmission power setting, an applicable cell type, an applicable scenario, a moving speed of the terminal device, a transmission configuration, an antenna configuration, channel information, or a format sequence.

87. The communication apparatus of any one of claims 61 to 86, wherein the second set is used to indicate one or more types of second processing models, and/or the second set comprises one or more identifiers of the one or more types of second processing models; and for second reference signals associated with different types of second processing models, at least one of the following is different:
a signal pattern, a transmission power setting, an applicable cell type, an applicable scenario, a moving speed of the terminal device, a transmission configuration, an antenna configuration, channel information, or a format sequence.

88. The communication apparatus of any one of claims 79 to 81 and 85 to 87, wherein a difference in signal patterns comprises at least one of the following:
the reference signal that is non-orthogonally transmitted with the data signal existing on different time-domain resources; or
the reference signal that is non-orthogonally transmitted with the data signal existing on different frequency-domain resources.

89. The communication apparatus of any one of claims 79 to 81 and 85 to 88, wherein transmission power settings corresponding to any two of the following are different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

90. The communication apparatus of any one of claims 61 to 89, wherein at least one of the one or more first reference signals, the one or more second reference signals, one or more third reference signals, one or more fourth reference signals, a fifth reference signal, or a sixth reference signal comprises at least one of the following:
a channel state information reference signal (CSI-RS), a demodulation reference signal (DMRS), a phase tracking reference signal (PT-RS), a sounding reference signal (SRS), a synchronization signal block (SSB), or a positioning reference signal (PRS).

91. A communication apparatus, comprising:
a communication unit, configured to receive a first set and/or send a second set;
wherein the first set is used to indicate at least one of the following: one or more first reference signals supported by a terminal device, or one or more first processing models supported by the terminal device; the first reference signal is non-orthogonally transmitted with a data signal; and the first processing model is used to process at least one of the following: the first reference signal and the data signal that are non-orthogonally transmitted, or the first reference signal; and
wherein the second set is used to indicate at least one of the following: one or more second reference signals supported by the communication apparatus, or one or more second processing models supported by the communication apparatus; the second reference signal is non-orthogonally transmitted with the data signal; and the second processing model is used to process at least one of the following: the second reference signal and the data signal that are non-orthogonally transmitted, or the second reference signal.

92. The communication apparatus of claim 91, wherein
the communication unit is further configured to send a third set; the third set is a subset of the first set; the third set is used to indicate at least one of the following: one or more third reference signals supported by the communication apparatus, or one or more third processing models supported by the communication apparatus; the third reference signal is non-orthogonally transmitted with the data signal; and the third processing model is used to process at least one of the following: the third reference signal and the data signal that are non-orthogonally transmitted, or the third reference signal.

93. The communication apparatus of claim 92, wherein the third set is comprised or carried in at least one of the following:
a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the communication apparatus.

94. The communication apparatus of claim 91, wherein
the communication unit is further configured to receive a fourth set; the fourth set is a subset of the second set; the fourth set is used to indicate at least one of the following: one or more fourth reference signals supported by the terminal device, or one or more fourth processing models supported by the terminal device; the fourth reference signal is non-orthogonally transmitted with the data signal; and the fourth processing model is used to process at least one of the following: the fourth reference signal and the data signal that are non-orthogonally transmitted, or the fourth reference signal.

95. The communication apparatus of claim 94, wherein the fourth set is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

96. The communication apparatus of any one of claims 91, 94 and 95, wherein
the communication unit is further configured to send first indication information; the first indication information indicates a fifth reference signal; and the fifth reference signal is comprised in at least one of the following: the one or more first reference signals, one or more first reference signals associated with the one or more first processing models, one or more fourth reference signals, or one or more fourth reference signals associated with one or more fourth processing models.

97. The communication apparatus of any one of claims 91 to 93, wherein
the communication unit is further configured to receive second indication information; the second indication information indicates a sixth reference signal; and the sixth reference signal is comprised in at least one of the following: the one or more second reference signals, one or more second reference signals associated with the one or more second processing models, one or more third reference signals, or one or more third reference signals associated with one or more third processing models.

98. The communication apparatus of any one of claims 91 to 97, wherein
the communication unit is further configured to send third indication information; and the third indication information indicates to report the first set.

99. The communication apparatus of claim 98, wherein the third indication information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), or an artificial intelligence (Al)/machine learning (ML) dedicated downlink channel.

100. The communication apparatus of any one of claims 91 to 99, wherein
the communication unit is further configured to receive fourth indication information; and the fourth indication information indicates the communication apparatus to send the second set.

101. The communication apparatus of claim 100, wherein the fourth indication information is comprised or carried in at least one of the following: a radio resource control (RRC) message, uplink control information (UCI), an uplink message during a random access procedure, a physical uplink control channel (PUCCH), a physical uplink shared channel (PUSCH), or an artificial intelligence (AI)/machine learning (ML) dedicated uplink channel.

102. The communication apparatus of any one of claims 91 to 101, wherein
the communication unit is further configured to receive first capability information; and the first capability information indicates that the terminal device supports to non-orthogonally transmit a signal and/or supports to process the signal that is non-orthogonally transmitted.

103. The communication apparatus of claim 102, wherein the first capability information is comprised or carried in at least one of the following: a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

104. The communication apparatus of any one of claims 91 to 103, wherein
the communication unit is further configured to send second capability information; and the second capability information indicates that the communication apparatus supports to non-orthogonally transmit a signal and/or supports to process the signal that is non-orthogonally transmitted.

105. The communication apparatus of claim 104, wherein the second capability information is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the communication apparatus.

106. The communication apparatus of any one of claims 91 to 105, wherein the first set is comprised or carried in at least one of the following:
a radio resource control (RRC) message, uplink control information (UCI), an uplink message during a random access procedure, a physical uplink control channel (PUCCH), a physical uplink shared channel (PUSCH), an artificial intelligence (AI)/machine learning (ML) dedicated uplink channel, or capability reporting information of the terminal device.

107. The communication apparatus of any one of claims 91 to 106, wherein the one or more first reference signals comprise one or more first uplink signals; and/or the one or more first reference signals comprise one or more first downlink signals.

108. The communication apparatus of any one of claims 91 to 107, wherein the first set comprises at least one of the following: one or more identifiers of one or more first uplink signals, one or more identifiers of one or more first downlink signals, or one or more identifiers of the one or more first processing models.

109. The communication apparatus of any one of claims 94 to 108, wherein the first set is used to indicate one or more types of first uplink signal sets, and/or the first set comprises one or more identifiers of the one or more types of first uplink signal sets; and for different types of first uplink signal sets, at least one of the following is different:
a signal pattern, a transmission power setting, an applicable cell type, an applicable scenario, a moving speed of the terminal device, a transmission configuration, an antenna configuration, channel information, or a format sequence.

110. The communication apparatus of any one of claims 91 to 109, wherein the first set is used to indicate one or more types of first downlink signal sets, and/or the first set comprises one or more identifiers of the one or more types of first downlink signal sets; and for different types of first downlink signal sets, at least one of the following is different:
a signal pattern, a transmission power setting, an applicable cell type, an applicable scenario, a moving speed of the terminal device, a transmission configuration, an antenna configuration, channel information, or a format sequence.

111. The communication apparatus of any one of claims 91 to 110, wherein the first set is used to indicate one or more types of first processing models, and/or the first set comprises one or more identifiers of the one or more types of first processing models; and for first reference signals associated with different types of first processing models, at least one of the following is different:
a signal pattern, a transmission power setting, an applicable cell type, an applicable scenario, a moving speed of the terminal device, a transmission configuration, an antenna configuration, channel information, or a format sequence.

112. The communication apparatus of any one of claims 91 to 111, wherein the second set is comprised or carried in at least one of the following: a broadcast message, a radio resource control (RRC) message, a medium access control (MAC) control element (CE), downlink control information (DCI), a downlink message during a random access procedure, a physical downlink control channel (PDCCH), a physical downlink shared channel (PDSCH), an artificial intelligence (AI)/machine learning (ML) dedicated downlink channel, or capability indication information of the communication apparatus.

113. The communication apparatus of any one of claims 91 to 112, wherein the one or more second reference signals comprise one or more second uplink signals; and/or the one or more second reference signals comprise one or more second downlink signals.

114. The communication apparatus of any one of claims 91 to 113, wherein the second set comprises at least one of the following: one or more identifiers of one or more second uplink signals, one or more identifiers of one or more second downlink signals, or one or more identifiers of the one or more second processing models.

115. The communication apparatus of any one of claims 91 to 114, wherein the second set is used to indicate one or more types of second uplink signal sets, and/or the second set comprises one or more identifiers of the one or more types of second uplink signal sets; and for different types of second uplink signal sets, at least one of the following is different:
a signal pattern, a transmission power setting, an applicable cell type, an applicable scenario, a moving speed of the terminal device, a transmission configuration, an antenna configuration, channel information, or a format sequence.

116. The communication apparatus of any one of claims 91 to 115, wherein the second set is used to indicate one or more types of second downlink signal sets, and/or the second set comprises one or more identifiers of the one or more types of second downlink signal sets; and for different types of second downlink signal sets, at least one of the following is different:
a signal pattern, a transmission power setting, an applicable cell type, an applicable scenario, a moving speed of the terminal device, a transmission configuration, an antenna configuration, channel information, or a format sequence.

117. The communication apparatus of any one of claims 91 to 116, wherein the second set is used to indicate one or more types of second processing models, and/or the second set comprises one or more identifiers of the one or more types of second processing models; and for second reference signals associated with different types of second processing models, at least one of the following is different:
a signal pattern, a transmission power setting, an applicable cell type, an applicable scenario, a moving speed of the terminal device, a transmission configuration, an antenna configuration, channel information, or a format sequence.

118. The communication apparatus of any one of claims 109 to 111 and 115 to 117, wherein a difference in signal patterns comprises at least one of the following:
the reference signal that is non-orthogonally transmitted with the data signal existing on different time-domain resources; or
the reference signal that is non-orthogonally transmitted with the data signal existing on different frequency-domain resources.

119. The communication apparatus of any one of claims 109 to 111 and 115 to 128, wherein transmission power settings corresponding to any two of the following are different:
a transmission power of the reference signal that is non-orthogonally transmitted with the data signal being a first power;
a ratio of a transmission power of the reference signal that is non-orthogonally transmitted with the data signal to a transmission power of the data signal being a first ratio;
a difference between a transmission power of the reference signal that is non-orthogonally transmitted with the data signal and a transmission power of the data signal being a first difference;
a transmission power of the reference signal that is non-orthogonally transmitted with the data signal being a first power, and a transmission power of the data signal being a second power;
a transmission power to be used being determined based on a position of the reference signal that is non-orthogonally transmitted with the data signal;
a transmission power to be used being determined based on a signal sequence corresponding to the reference signal that is non-orthogonally transmitted with the data signal;
a transmission power to be used being determined based on a position of the reference signal that is non-orthogonally transmitted with the data signal and a signal sequence corresponding to the reference signal that is non-orthogonally transmitted with the data signal;
different transmission powers being used for the reference signal that is non-orthogonally transmitted with the data signal at different positions; or
different transmission powers being used for different signal sequences corresponding to the reference signal that is non-orthogonally transmitted with the data signal.

120. The communication apparatus of any one of claims 91 to 119, wherein at least one of the one or more first reference signals, the one or more second reference signals, one or more third reference signals, one or more fourth reference signals, a fifth reference signal, or a sixth reference signal comprises at least one of the following:
a channel state information reference signal (CSI-RS), a demodulation reference signal (DMRS), a phase tracking reference signal (PT-RS), a sounding reference signal (SRS), a synchronization signal block (SSB), or a positioning reference signal (PRS).

121. A terminal device, comprising a processor, a memory, and a transceiver;
wherein the memory is configured to store a computer program, and
the processor is configured to call and run the computer program stored in the memory, and cooperate with the transceiver to execute the method of any one of claims 1 to 30.

122. A network device, comprising a processor, a memory, and a transceiver;
wherein the memory is configured to store a computer program, and
the processor is configured to call and run the computer program stored in the memory, and cooperate with the transceiver to execute the method of any one of claims 31 to 60.

123. A computer storage medium, having stored one or more programs executable by one or more processors to implement the method of any one of claims 1 to 30 or the method of any one of claims 31 to 60.

124. A chip, comprising a processor configured to call and run a computer program from a memory to implement the method of any one of claims 1 to 30 or the method of any one of claims 31 to 60.

125. A computer program product, comprising a computer storage medium storing a computer program, the computer program comprising an instruction executable by at least one processor, and the instruction, when executed by the at least one processor, implementing the method of any one of claims 1 to 30 or the method of any one of claims 31 to 60.

126. A computer program, enabling a computer to execute the method of any one of claims 1 to 30 or the method of any one of claims 31 to 60.
